# EUROPEAN PATENT APPLICATION

(11) **EP 1 408 063 A1**
(43) Date of publication of application: **14.04.2004**
(21) Application number: 02726466.2
(22) Date of filing: 23.05.2002
(51) Int. Cl.: C08G 18/48, B29C 39/24

(54) **PROCESS FOR PRODUCING FLEXIBLE POLYURETHANE FOAMS AND APPARATUS FOR PRODUCING FLEXIBLE POLYURETHANE FOAMS**

(30) Priority: 24.05.2001 JP 2001155760
(71) Applicant: MITSUI TAKEDA CHEMICALS, INC., Tokyo 100-6009 (JP)
(72) Inventor: ISOBE, Masahiro, c/o MITSUI TAKEDA CHEMICALS, INC., Sodegaura-shi, Chiba 299-0265 (JP); UTSUMI, Hiroyuki, c/o MITSUI TAKEDA CHEMICALS, INC, Sodegaura-shi, Chiba 299-0265 (JP); OHKUBO, Kazuhiko, c/o MITSUI TAKEDA CHEMICALS, INC, Sodegaura-shi, Chiba 299-0265 (JP)
(74) Representative: Ford, Michael Frederick
(86) International application number: PCT/JP2002/004999
(87) International publication number: WO 2002/100916

(57) **Abstract**

A process for producing various kinds of flexible polyurethane foams with different properties, comprising: bringing at least a polyol, a polyisocyanate and a blowing agent to contact with each other by employing a single production apparatus, wherein the polyisocyanate contains tolylene diisocyanate, and the polyol consists essentially of two or three types of polyols, at least two of these two or three types of polyols being selected from the group consisting of three types of polyoxyalkylene polyether polyols having an overall degree of unsaturation of less than 0.06 meq/g and three types of polymer polyols obtained from polyoxyalkylene polyether polyols having an overall degree of unsaturation of less than 0.06 meq/g; and wherein the two or three types of polyols, the polyisocyanate and the blowing agent are mixed at a mixing ratio varied to attain various changes of the values of the properties, thus flexible polyurethane foams with desired properties being obtainable. In particular, the use of a polyisocyanate containing tolylene diisocyanate in an amount of 20% by weight or more enables to change a core density of the flexible polyurethane foam in the range of 20 to 70 kg/m³ and to change a 25% ILD hardness of the flexible polyurethane foam in the range of 50 to 400 N/314 cm².

In the process for producing flexible polyurethane foams of the present invention, various kinds of flexible polyurethane foams having a wide range of values of properties such as hardness, density and impact resilience so as to meet requirements of a wide range of values of properties can be produced from essentially two or three types of polyols by employing a single production apparatus in a simple manner.

## Description

### FIELD OF THE INVENTION

The present invention relates to a process for producing flexible polyurethane foams and an apparatus therefor. More particularly, the present invention relates to a process for producing flexible polyurethane foams, wherein various kinds of flexible polyurethane foams having a wide range of values of properties such as hardness and density can be produced through appropriate mixing of two or more different types of polyols by employing a single production apparatus in a simple manner, and relates to an apparatus therefor.

### BACKGROUND OF THE INVENTION

Flexible polyurethane foams have appropriate cushioning properties, so that they are widely used in vehicles (for example, an automobile seat or the like) , furniture (for example, bedding or the like) , sundries, etc. and it is required that the flexible polyurethane foams have different properties or forms according to these applications. Further, even in a seat or a bedding, it is required that parts thereof have different forms or qualities with respect to the shape, size, density, vibration characteristics and the like.

For example, with respect to an automobile seat, it is required that the seat cushion have a shape fit for the haunch and have relatively high density, high impact resilience and high hardness, while the seat back for supporting the back have, for example, a shape adapted to hold the upper body from the back side of the seat back and have low density and relatively low hardness. Moreover, of the seat cushions, it is required that front seat cushions for which high durability is desired because of high use frequency comprise foams of higher density comparedwithrearseatcushions. Thus, itisrequiredtoprovide flexible polyurethane foams which have different properties with respect to hardness, density, impact resilience and the like according to the applications and needs.

For providing such flexible polyurethane foams with different properties, for example, it is needed to appropriately select the type of polyol, characteristics such as hydroxyl.value and type of blowing agent. In the conventional production of various kinds of flexible polyurethane foams with different properties, it has been needed, for example, to provide in advance various types of polyols of corresponding to the properties of desired flexible polyurethane foams and to prepare the same number of resin premixes. Consequently, it has been needed to provide a plurality of drums for preparing resin premix, storage tanks and the like. Further, it has occasionally been needed to set up separate production apparatuses for individual products. If it is difficult to set up a plurality of production lines, it has been needed to carry out washing of production apparatus and replacement of raw materials upon the completion of production of each individual product.

Regulating properties of foam in accordance with needs, for example, producing flexible polyurethane foams with extremely different properties with respect to hardness and the like can be accomplished by varying the hydroxyl value and/or functionality of polyol component. However, in this case, it is needed to individually produce or procure a type of polyol with desired hydroxyl value and functionality and to produce a flexible polyurethane foam by employing a production apparatus adapted for the particular type of polyol. In the absence of a production apparatus adapted for the particular type of polyol, there has occurred such a problem that it is difficult to substantially change hardness or the like.

Furthermore, for example, when flexible polyurethane foams for seat cushions having different properties with respect to hardness, a density and the like are produced without varying the resin premix prepared from a polyol and/or polymer polyol (also known as "polymer-dispersed polyol") of desired characteristics, the hardness of the flexible polyurethane foam can be regulated by varying the index of polyisocyanate or the density of the flexible polyurethane foam. However, it is difficult or infeasible to further change the density of the flexible polyurethane foam over a wide range while maintaining the hardness thereof. Much more, it is difficult or infeasible to produce flexible polyurethane foams for other applications such as seat backs from the above resin premix, the properties such as density further being changed over a wide range.

In particular, when tolylene diisocyanate is used as the polyisocyanate in order to lighten the weight of a flexible polyurethane foam, the range of the value of properties of the flexible polyurethane foam changeable beyond the properties determined by the type of polyol with desired characteristics would be further reduced in the conventional production process. Consequently, it has been difficult to produce various kinds of flexible polyurethane foams having a wide range of values of properties.

In recent years, it is strongly required to improve riding comfort in an automobile, thus it is required to enable changing the impact resilience of a flexible polyurethane foam over a wide range as well. For example, a seat cushion with an impact resilience of over 70% is required in a certain type of automobile, while a seat cushion with an impact resilience of 60% or less is required in another type of automobile. It has been difficult to produce these seat cushions by the conventional process without varying the resin premix.

However, with respect to, for example, a seat for an automobile, it is required to enhance not only lightening weight and riding comfort but also other various properties. Accordingly, it is further required to provide flexible polyurethane foams having various properties with respect to the hardness, density, air flow value, transmissibility at resonance frequency, transmissibility at high-frequency region or the like. In order to meet these requirements by the conventional production process, it is necessary to accomplish an increase of raw materials, an increase of production steps, an improvement of apparatuses and the like. Hence, it has been required to provide a production process wherein these can be minimized or are no longer needed. Moreover, in compliance with requirements such as reducing product stock and improving productivity, it has become required to provide various kinds of flexible polyurethane foams with different properties within a short period of time. Therefore, it is required to provide a simplified efficient process for producing flexible polyurethane foams which enable wide changes of values of properties such as hardness, density and impact resilience of flexible polyurethane foams.

The present invention has been made in order to solve the above problems of the background art. It is an object of the present invention toprovide a production process wherein various kinds of flexible polyurethane foams having a wide range of values of properties such as hardness and density so as to meet requirements of a wide range of values of properties can be obtained by the employing a single production apparatus in a simple manner, and to provide a production apparatus therefor.

### DISCLOSURE OF THE INVENTION

The inventors have studied eagerly in order to solve the above problems. As a result, it has been found that when characteristics such as the hydroxyl value of polyol and the weight percentage of polymer polyol contained are arbitrarily regulated by the use of a polyisocyanate containing tolylene diisocyanate as a polyisocyanate and essentially two or three types of polyols having an overall degree of unsaturation of less than 0.06 meq/g as a polyol, various kinds of flexible polyurethane foams having a wide range of values of properties such as hardness, density and impact resilience so as to meet requirements of a wide range of the values of properties can be obtained by using a single production apparatus in a simple manner.

Therefore, a process for producing flexible polyurethane foams according to the present invention is one for producing various kinds of flexible polyurethane foams with different properties, comprising:
bringing at least a polyol, a polyisocyanate and a blowing agent to contact with each other by employing a single production apparatus, wherein
the polyisocyanate contains tolylene diisocyanate, and
the polyol consists essentially of two or three types of polyols, at least two of these two or three types of polyols being selected from the group consisting of:
   three types of polyoxyalkylene polyether polyols having an overall degree of unsaturation of less than 0.06 meq/g and
   three types of polymer polyols obtained from polyoxyalkylene polyether polyols having an overall degree of unsaturation of less than 0.06 meq/g;
   and wherein
   at least the polyisocyanate, the polyol and the blowing agent are mixed by employing a multimixing head (multicomponent head) equipped with at least three feed openings, and
   the mixing ratio of the two or three types of polyols, the polyisocyanate and the blowing agent is varied to attain various changes of the values of the properties, thus flexible polyurethane foams with desired properties being obtainable.

Further, in the process for producing flexible polyurethane foams according to the present invention,
the polyisocyanate contains tolylene diisocyanate in an amount of 20% by weight or more, and
the polyol consists essentially of two or three types of polyols, at least two of these two or three types of polyols being selected from the group consisting of:
three types of polyoxyalkylene polyether polyols having an overall degree of unsaturation of less than 0.06 meq/g and
three types of polymer polyols obtained from polyoxyalkylene polyether polyols having an overall degree of unsaturation of less than 0.06 meq/g;
and the two or three types of polyols, the polyisocyanate and the blowing agent are mixed at a mixing ratio varied to attain changing of a core density of the flexible polyurethane foam in the range of 20 to 70 kg/m³ and changing of a 25% ILD hardness of the flexible polyurethane foam in the range of 50 to 400 N/314 cm², thus, the obtained flexible polyurethane foams having a spectral peak, measured by an infrared spectrophotometer, in the range of 1645 to 1700 cm⁻¹ being obtainable.

Preferably, the mixing ratio of the two or three types of polyols, the polyisocyanate and the blowing agent is varied so as to continuouslyproducevarious kinds of flexible polyurethane foams with different density and/or hardness values by employing a single production apparatus.

The amount of each of the two or three types of polyols mixed is preferably varied in the range of 0 to 100 parts by weight.

It is preferable to prepare resin premixes with the use of at least one of the two or three types of polyols, and to mix the resin premixes with each other and/or with a polyol.

With respect to the resin premixes, it is preferable that the two or three types of polyols consist essentially of:
oneortwotypesofpolyoxyalkylenepolyetherpolyolshaving an overall degree of unsaturation of less than 0.06 meq/g and
one polymer polyol obtained from a polyoxyalkylene polyether polyol having an overall degree of unsaturation of less than 0.06 meq/g,
or consist essentially of:
   one polyoxyalkylene polyether polyol having an overall degree of unsaturation of less than 0.06 meq/g and
   two types of polymer polyols obtained from polyoxyalkylene polyether polyols having an overall degree of unsaturation of less than 0.06 meq/g,
   and that the resin premixes are various types of, for example, two to five types, preferably two or three types of resin premixes prepared by mixing the two or three types of polyols and having the polyol mixing ratios different from each other.

It is preferable that all the polyoxyalkylene polyether polyols contained in the two or three types of polyols have an overall degree of unsaturation of less than 0.04 meq/g.

At least one of the two or three types of polyols is preferably constituted of a polymer polyol which contains a polyoxyalkylene polyether polyol and 10% by weight or more of a vinyl polymer.

In the production of flexible polyurethane foams, it is preferable to use a chemical blowing agent.

It is preferable to mix the polyol, the polyisocyanate and the blowing agent by employing a multicomponent head equipped with at least three feed openings, a raw material mixing section and a discharge section for discharging a mixture.

The polyol and the polyisocyanate are preferably discharged at a discharge pressure of 8 MPa or above.

Preferably, the flexible polyurethane foam has a wet heat compression set of 0 to 25%.

The flexible polyurethane foam preferably has a hardness change of 1 to 18% in a repeated compression test.

Preferably, the flexible polyurethane foam is a flexible polyurethane foam for use in a main part of an automobile seat cushion, a side part of an automobile seat cushion, a main part of an automobile seat back or a side part of an automobile seat back, of which a hardness is different depending on the application thereof, and at least two kinds of flexible polyurethane foams having different hardness values are produced in combination.

An apparatus for producing flexible polyurethane foams according to the present invention is one for producing various kinds of flexible polyurethane foams with different properties, comprising:
at least one feed opening for feeding a polyisocyanate and one or a plurality of feed openings for feeding essentially two or three types of polyols, wherein
the polyisocyanate contains tolylene diisocyanate, and
the polyols consist essentially of two or three types of polyols, at least two of these two or three types of polyols being selected from the group consisting of:
   three types of polyoxyalkylene polyether polyols having an overall degree of unsaturation of less than 0.06 meq/g and
   three types of polymer polyols obtained from polyoxyalkylene polyether polyols having an overall degree of unsaturation of less than 0.06 meq/g;
   and wherein
   at least the polyisocyanate, the polyols and a blowing agent can be mixed by employing a multimixing head (multicomponent head) equipped with at least three feed openings, and
   the mixing ratio of the two or three types of polyols, the polyisocyanate and the blowing agent is varied to attain various changes of the values of the properties, thus, flexible polyurethane foams with desired properties being obtainable.

Further, an apparatus for producing flexible polyurethane foams according the present invention is one for producing various kinds of flexible polyurethane foams with different properties, comprising:
at least one feed opening for feeding a polyisocyanate and one or a plurality of, for example, one to five feed openings for feeding essentially two or three types of polyols, wherein
the polyisocyanate contains tolylene diisocyanate in an amount of 20% by weight or more, and
the polyols consist essentially of two or three types of polyols, at least two of these two or three types of polyols being selected from the group consisting of:
   three types of polyoxyalkylene polyether polyols having an overall degree of unsaturation of less than 0.06 meq/g and
   three types of polymer polyols obtained from polyoxyalkylene polyether polyols having an overall degree of unsaturation of less than 0.06 meq/g;
   and wherein
   the two or three types of polyols, the polyisocyanate and a blowing agent can be mixed at a mixing ratio varied to attain changing of a core density of the flexible polyurethane foam in the range of 20 to 70 kg/m³ and changing of a 25% ILD hardness of the flexible polyurethane foam in the range of 50 to 400 N/314 cm², thus, the flexible polyurethane foams having a spectral peak, measured by an infrared spectrophotometer, in the range of 1645 to 1700 cm⁻¹ being obtainable.

Preferably, the mixing ratio of the two or three types of polyols, the polyisocyanate and the blowing agent can be varied so as to enable continuously to produce various kinds of flexible polyurethane foams with different density and/or hardness values.

Preferably, the amount of each of the two or three types of polyols mixed can be varied in the range of 0 to 100 parts by weight.

Preferably, that at least one of the one or a plurality of, for example, one to five feed openings for feeding two or three types of polyols is a feed opening for feeding a resin premix,
which can be prepared with the use of at least one of the two or three types of polyols, and the resin premixes can be mixed with each other and/or with one or two types of polyols.

Preferably, the one or a plurality of, for example, one to five feed openings for feeding two or three types of polyols are one or a plurality of, for example, one to five feed openings for feeding various types of resin premixes,
which can be fed as various types of, for example, two to five types, preferably two or three types of resin premixes prepared by mixing the essentially two or three types of polyols and having the polyol mixing ratios different from each other, the two or three types of polyols consisting of:
one or two types of polyoxyalkylene polyether polyols having an overall degree of unsaturation of less than 0.06 meq/g and
one polymer polyol obtained from a polyoxyalkylene polyether polyol having an overall degree of unsaturation of less than 0.06 meq/g,
or consisting of:
   one polyoxyalkylene polyether polyol having an overall degree of unsaturation of less than 0.06 meq/g, and
   two types of polymer polyols obtained from polyoxyalkylene polyether polyols having an overall degree of unsaturation of less than 0.06 meq/g.

It is preferable to enable feeding polyols containing polyoxyalkylene polyether polyols all having an overall unsaturation of less than 0.04 meq/g as the two or three types of polyols.

Preferably, a polymer polyol containing a polyoxyalkylene polyether polyol and 10% by weight. or more of a vinyl polymer can be fed as at least one of the two or three types of polyols.

It is preferable to enable feeding a chemical blowing agent as the blowing agent.

The apparatus preferably comprises a multimixing head (multicomponent head) equipped with at least three feed openings, a raw material mixing section and a discharge section for discharging a mixture, and wherein the polyols, the polyisocyanate and the blowing agent can be mixed by employing the multicomponent head.

Preferably, the polyols and the polyisocyanate can be discharged at a discharge pressure of 8 MPa or above.

It is preferable to enable producing flexible polyurethane foams having a wet heat compression set of 0 to 25%.

Preferably, flexible polyurethane foams having a hardness change of 1 to 18% in a repeated compression test can be produced.

Preferably, the flexible polyurethane foam is a flexible polyurethane foam for use in a main part of an automobile seat cushion, a side part of an automobile seat cushion, a main part of an automobile seat back or a side part of an automobile seat back, of which a hardness is different depending on the application thereof, and at least two kinds of flexible polyurethane foams having different hardness values can be produced in combination.

More specifically, the present invention provides, for example, a process for producing flexible polyurethane foams wherein, by employing a single production apparatus, at least five types of flexible polyurethane foams for uses in a seat cushion with high impact resilience, a lightweight seat cushion, a high-hardness part of a seat cushion, a seat back and a high-hardness part of a seat back can be produced by using two types of polyols, preparing three types of resin premixes wherein the mixing ratios of polyols are different from each other and varying the mixing ratios of the resin premixes so as to attain changing of the values of the properties such as the density, hardness, impact resilience of the obtained flexible polyurethane foams over a range wider than in the conventional process. Further, the present invention provides a production apparatus therefor.

### BRIEF DESCRIPTION OF THE DRAWINGS

Fig. 1 is a schematic view of an automobile seat according to the present invention.
Fig. 2 is a schematic view of a multimixing head for use in the present invention.
Fig. 3 is a top view of the multimixing head shown in Fig. 2.
Fig. 4 is a schematic view of a mixing head use usually.
Fig. 5 is a top view of the mixing head shown in Fig. 4.
Fig. 6 is a schematic view of an apparatus for producing flexible polyurethane foams according to the present invention.

### PREFERRED EMBODIMENTS OF THE INVENTION

The process for producing flexible polyurethane foams according to one aspect of the present invention is one for producing various kinds of flexible polyurethane foams with different properties, comprising:
bringing at least a polyol, a polyisocyanate and a blowing agent to contact with each other by employing a single production apparatus, wherein
the polyisocyanate contains tolylene diisocyanate, and
the polyol consists essentially of two or three types of polyols, at least two of these two or three types of polyols being specified polyols;
and wherein
at least the polyisocyanate, the polyol and the blowing agent are mixed by employing a multimixing head (multicomponent head) equipped with at least three feed openings, and
the mixing ratio of the two or three types of polyols, the polyisocyanate and the blowing agent is varied to attain various changes of the values of the properties, thus flexible polyurethane foams with desired properties being obtainable.

Further, in the process for producing flexible polyurethane foams according to the present invention,
the polyisocyanate contains tolylene diisocyanate in an amount of 20% by weight or more, and
the polyol consists essentially of two or three types of polyols, at least two of these two or three types of polyols consisting of specified polyols, and these polyols or resin premixes containing these polyols being mixed; and
the two or three types of polyols, the polyisocyanate and the blowing agent are mixed at a mixing ratio varied to attain changing of the values of the properties such as core density and 25% ILD hardness of flexible polyurethane foam over a wide range.

### [Polyol]

The polyol for use in the present invention consists essentially of two or three types of polyols.

At least two of these two or three types of polyols are selected from the group consisting of:
three types of polyoxyalkylene polyether polyols having an overall degree of unsaturation of less than 0.06 meq/g and
three types of polymer polyols obtained from polyoxyalkylene polyether polyols having an overall degree of unsaturation of less than 0.06 meq/g.

When three types of polyols are used, one thereof may be a polyol containing a polyether polyol having an overall degree of unsaturation of 0.06 meq/g or above.

By using such polyols of a low overall degree of unsaturation various kinds of flexible polyurethane foams with widely different values of properties such as hardness, density, air flow value, transmissibility at resonance frequency, transmissibility at high-frequency region can be produced.

The expression "essentially two or three types of polyols" means that polyols other than the above two or three types of polyols may be contained to an extent not detrimental to the object of the present invention, for example, in an amount of less than 5% by weight based on the total amount of polyols.

The above polyols preferably contain both a polyether polyol and a polymer polyol. Specifically, the above polyols preferably consist essentially of:
two types of polyols consisting of one selected from among the above polyether polyols and one selected from among the above polymer polyols; or
three types of polyols consisting of one selected from among the above polyether polyols and two selected from among the above polymer polyols; or
three types of polyols consisting of two selected from among the above polyether polyols and one selected from among the above polymer polyols.

Also, the above polyols may be two or three types of polyols selected from among the above polyether polyols only, or the above polymer polyols only.

The polyoxyalkylene polyether polyol, polymer polyol and the like will be described below.

### <Polyoxyalkylene polyether polyol>

The polyoxyalkylene polyether polyol contained in the polyols for use in the present invention comprises an oligomer or polymer obtained by ring-opening polymerization of an alkylene oxide with the use of an active hydrogen compound as an initiator.

The polyoxyalkylene polyether polyol may be referred to as "polyoxyalkylene polyol".

### (Active hydrogen compound)

The active hydrogen compound used as an initiator in the production of polyoxyalkylene polyether polyol can be, for example, an active hydrogen compound having an active hydrogen atom on an oxygen atom or an active hydrogen compound having an active hydrogen atom on a nitrogen atom.

Examples of the active hydrogen compound having an active hydrogen atom on an oxygen atom include:
water;
carboxylic acids having 1 to 20 carbon atoms, such as formic acid, acetic acid, propionic acid, butyric acid, isobutyric acid, lauric acid, stearic acid, oleic acid, phenylacetic acid, dihydrocinnamic acid or cyclohexanecarboxylic acid, benzoic acid, para-methylbenzoic acid and 2-carboxynaphthalene;
polycarboxylic acids having 2 to 6 carboxyl groups and having 2 to 20 carbon atoms, such as oxalic acid, malonic acid, succinic acid, maleic acid, fumaric acid, adipic acid, itaconic acid, butanetetracarboxylic acid, phthalic acid, isophthalic acid, terephthalic acid, trimellitic acid and pyromellitic acid;
carbamic acids, such as N,N-diethylcarbamic acid, N-carboxypyrrolidone, N-carboxyaniline and N,N'-dicarboxy-2,4-toluenediamine;
alcohols having 1 to 20 carbon atoms, such as methanol, ethanol, n-propanol, isopropanol, n-butyl alcohol, sec-butyl alcohol, tert-butyl alcohol, isopentyl alcohol, tert-pentyl alcohol, n-octyl alcohol, lauryl alcohol, cetyl alcohol, cyclopentanol, cyclohexanol, allyl alcohol, crotyl alcohol, methylvinylcarbinol, benzyl alcohol, 1-phenylethyl alcohol, triphenylcarbinol and cinnamyl alcohol;
polyhydric alcohols having 2 to 8 hydroxyl groups and having 2 to 20 carbon atoms, such as ethylene glycol, propylene glycol, diethylene glycol, dipropylene glycol, 1,3-propanediol, 1,3-butanediol, 1,4-butanediol, 1,6-hexanediol, 1,4-cyclohexanediol, trimethylolpropane, glycerol, diglycerol, pentaerythritol and dipentaerythritol;
saccharides and derivatives thereof, such as glucose, sorbitol, dextrose, fructose and sucrose;
aromatic compounds having 1 to 3 hydroxyl groups and having 6 to 20 carbon atoms, such as phenol, 2-naphthol, 2,6-dihydroxynaphthalene and bisphenol A; and
polyalkylene oxides having 2 to 8 terminals and having 1 to 8 hydroxyl groups in the terminal position, such as polyethylene oxide, polypropylene oxide and copolymers thereof.

Examples of the active hydrogen compound having an active hydrogen atom on a nitrogen atom include:
aliphatic or aromatic primary amines having 1 to 20 carbon atoms, such as methylamine, ethylamine, n-propylamine, isopropylamine, n-butylamine, isobutylamine, sec-butylamine, tert-butylamine, cyclohexylamine, benzylamine, β-phenylethylamine, aniline, o-toluidine, m-toluidine and p-toluidine;
aliphatic or aromatic secondary amines having 2 to 20 carbon atoms, such as dimethylamine, methylethylamine, diethylamine, di-n-propylamine, ethyl-n-butylamine, methyl-sec-butylamine, dipentylamine, dicyclohexylamine, N-methylaniline and diphenylamine;
polyamines having 2 or 3 primary or secondary amino groups and having 2 to 20 carbon atoms, such as ethylenediamine, di(2-aminoethyl)amine, hexamethylenediamine, 4,4'-diaminodiphenylmethane, tri(2-aminoethyl)amine, N,N'-dimethylethylenediamine, N,N'-diethylethylenediamine and di(2-methylaminoethyl)amine;
saturated cyclic secondary amines having 4 to 20 carbon atoms, such as pyrrolidine, piperidine, morpholine and 1,2,3,4-tetrahydroquinoline;
unsaturated cyclic secondary amines having 4 to 20 carbon atoms, such as 3-pyrroline, pyrrole, indole, carbazole, imidazole, pyrazole and purine;
cyclic polyamines having 2 or 3 secondary amino groups and having 4 to 20 carbon atoms, such as piperazine, pyrazine and 1,4,7-triazacyclononane;
unsubstituted or N-monosubstituted acid amides having 2 to 20 carbon atoms, such as acetamide, propionamide, N-methylpropionamide, N-methylbenzamide and N-ethylstearamide;
5 to 7-membered cyclic amides, such as 2-pyrrolidone and ε-caprolactam; and
dicarboxylic acid imides having 4 to 10 carbon atoms, such as succinimide, maleimide and phthalimide.

Of these, active hydrogen compounds such as polyhydric alcohols, saccharides and derivatives thereof are preferable. Still preferred examples of active hydrogen compounds include ethylene glycol, propylene glycol, diethylene glycol, dipropylene glycol, 1,4-butanediol, trimethylolpropane, glycerol, diglycerol, pentaerythritol, dipentaerythritol, glucose and sorbitol.

### (Alkylene oxide compound)

The alkylene oxide compound used in the production of polyoxyalkylenepolyetherpolyol for use in the present invention can be, for example, an epoxy compound, such as ethylene oxide, propylene oxide, 1,2-butylene oxide, 2,3-butylene oxide, styrene oxide, cyclohexene oxide, epichlorohydrin, epibromohydrin, methyl glycidyl ether, allyl glycidyl ether or phenyl glycidyl ether.

Of these alkylene oxide compounds, ethylene oxide, propylene oxide, 1,2-butylene oxide and styrene oxide are preferable. Ethylene oxide and propylene oxide are still preferable.

These compounds can be used singly or in combination of two or more kinds. When these compounds are used in combination, the compounds preferably contain ethylene oxide. The ratio of ethylene oxide contained in alkylene oxides is preferably in the range of 5 to 25% by weight, still preferably 10 to 20% by weight.

Preferably, hydroxyl groups derived from ethylene oxide are present in the terminal positions of polyoxyalkylene polyether polyol molecules.

### (Process for producing polyoxyalkylene polyether polyol)

The polyoxyalkylene polyether polyol for use in the present invention can be produced by known processes. The polyoxyalkylene polyether polyol can be usually obtained by ring-opening polymerization of the above alkylene oxide with the use of the above active hydrogen compound as an initiator in the presence of a catalyst.

For example, the process for producing a polyoxyalkylene polyether polyol may comprise a step of an addition polymerization of the alkylene oxide to the active hydrogen compound as an initiator in the presence of a polymerization catalyst under high pressure. The active hydrogen compounds and the alkylene oxides can be used singly or in combination of plural kinds.

It is desired that the thus obtained polyoxyalkylene polyether polyol have an overall degree of unsaturation of less than 0.06 meq/g, preferably less than 0.04 meq/g, still preferably 0.005 to 0.030 meq/g, and particularly preferably 0.005 to 0.026 meq/g.

By lowering the overall degree of unsaturation of polyoxyalkylene polyether polyol contained in polyols, various kinds of flexible polyurethane foams with different properties over a wider range can be produced.

When the overall degree of unsaturation falls within the above ranges, the hydroxyl value of a polyoxyalkylene polyether polyol, although not particularly limited, is preferably in the range of 15 to 60 mgKOH/g, still preferably 20 to 45 mgKOH/g, and particularly preferably 25 to 40 mgKOH/g.

In particular, when all the polyoxyalkylene polyether polyols have an overall degree of unsaturation of less than 0.03 meq/g, by regulating the mixing ratio of the above two or three types of polyols, a wet heat compression set can be reduced so as to enable producing flexible polyurethane foams having wet heat compression set values over a range wider than in the conventional process.

### <Polymer polyol>

In the present invention, the polymer polyol refers to a polyol containing a polymer derived from a vinyl compound (hereinafter also referred to as "vinyl polymer") obtained by, in polyols, a dispersion polymerization of a compound having a vinyl group (hereinafter also referred to as "vinyl compound") such as acrylonitrile or styrene. The vinyl polymer is usually in particulate form in polyols.

Although the vinyl polymer may be a homopolymer of vinyl compound, in the present invention, the vinyl polymer obtained by grafting a portion of a vinyl compound such as acrylonitrile is grafted to polyols as a dispersion medium during the dispersion polymerization is preferable.

The vinyl compound for use in the present invention is one having a vinyl group in its molecule. Examples of the vinyl compound include acrylonitrile, styrene and acrylamide.

These compounds can be used singly or in combination of two or more kinds. Of these, acrylonitrile and styrene are preferably used in the present invention.

The polymer polyol can be produced by known processes, and can be produced by a dispersion polymerization of a given amount of vinyl compound in polyols with the use of a radical initiator such as azobisisobutyronitrile:

Intheproductionofpolymerpolyol, adispersionstabilizer, a chain transfer agent and the like may be used in combination with the vinyl compound.

With respect to at least one of the two or three types of polyols for use in the present invention, the ratio of vinyl polymer contained in polyoxyalkylene polyether polyols is preferably 10% by weight or more, still preferably 10 to 50% by weight, yet still preferably 10 to 45% by weight, and particularly preferably 10 to 40% by weight, based on the amount of polyoxyalkylene polyether polyols.

The polyols of the present invention may contain polyols other than the above-mentioned polyols to an extent not detrimental to the object of the present invention.

Examples of such other polyols include:
dihydric alcohols, such as ethylene glycol and propylene glycol;
trihydric alcohols, such as glycerol and trimethylolpropane;
tetrahydric alcohols, such as pentaerythritol and diglycerol;
polyoxyalkylene polyether polyols other than the above-mentioned polyether polyols;
polymer polyols other than the above-mentioned polymer polyols; and
polyester polyols.

These other polyols may be used singly or in combination of two or more types.

The mixing ratio of these two or three types of polyols is varied depending on the desired properties of a flexible polyurethane foam and is not particularly limited.

The process for producing flexible polyurethane foams with the use of the polyisocyanate containing tolylene diisocyanate and the polyols having an overall degree of unsaturation of less than 0.06 meq/g is occasionally referred to as case 1.

### [Polyol for production of flexible polyurethane foam

when at least one polyol having a hydroxyl value of 20 to 38 mgKOH/g is used]

In the case 1, the polyisocyanate containing tolylene diisocyanate is preferably used as the polyisocyanate. However, when flexible polyurethane foams with different properties over a wide range with the use of a combination of specified polyols having a hydroxyl value of 20 to 38 mgKOH/g are produced, arbitrary isocyanates can be used (case 2). Further, when it is not needed to change the 25% ILD hardness and core density over a wide range, the type of isocyanate is not particularly limited, and the case 2 is preferably performed.

The process for producing flexible polyurethane foams according to the case 2 comprises reacting a polyols, a polyisocyanate and a chemical blowing agent with each other. The polyols can be used by mixing at least two polyols selected from among specified polyols (a), (b) and (c), or resin premixes containing the same.

The polyols for use in the case 2 contains at least two of the specified polyols (a) , (b) and (c), preferably three all of the specified polyols (a) , (b) and (c). The polyols for use in the case 2 may contain polyol (d) other than the specified polyols (a), (b) and (c) to an extent not detrimental to the object of the present invention.

The polyol (a) consists essentially of:
a polyoxyalkylene polyether polyol (a-1) having a hydroxyl value of 20 to 38 mgKOH/g and an overall degree of unsaturation of 0.060 meq/g or less, or
a polymer polyol (a-2) which contains the polyoxyalkylene polyether polyol (a-1) and a vinyl polymer.

The polyol (b) consists essentially of:
a polymer polyol (b-2) which contains a polyoxyalkylene polyether polyol (b-1) having a hydroxyl value of 20 to 38 mgKOH/g and an overall degree of unsaturation of 0.060 meq/g or less and a vinyl polymer. The above polyoxyalkylene polyether polyols (a-1) and (b-1) may be the same as or different from each other.

The difference (b-a) between the content weight percentage (b) of vinyl polymer contained in the polyol (b) (ratio of vinyl polymer to polyol (b)) and the content weight percentage (a) of vinyl polymer contained in the polyol (a) (ratio of vinyl polymer to polyol (a)) is in the range of 2 to 30% by weight.

The polyol (c) consists essentially of:
a polyoxyalkylene polyether polyol (c-1) having a hydroxyl value of 28 to 60 mgKOH/g, which has the hydroxyl value of 5 mgKOH/g or more greater than those of the polyoxyalkylene polyether polyols (a-1) and (b-1), or
a polymer polyol (c-2) which contains the polyoxyalkylene polyether polyol (c-1) and a vinyl polymer.

The polyoxyalkylene polyether polyols, polymer polyols and the like for use in the case 2 will be described below.

### <Polyoxyalkylene polyether polyol used in case 2>

The polyoxyalkylene polyether polyol contained in the polyols (a), (b) and (c) for use in the case 2 is an oligomer or a polymer obtained by ring-opening polymerization of an alkylene oxide with the use of an active hydrogen compound as an initiator.

### (Active hydrogen compound used in case 2)

The active hydrogen compound used as an initiator in the production of polyoxyalkylene polyether polyol can be, for example, an active hydrogen compound having an active hydrogen atom on an oxygen atom or an active hydrogen compound having an active hydrogen atom on a nitrogen atom.

Examples of the active hydrogen compound having an active hydrogen atom on an oxygen atom include those set out hereinbefore.

Examples of the active hydrogen compound having an active hydrogen atom on a nitrogen atom include those set out hereinbefore.

Of these, active hydrogen compounds such as polyhydric alcohols, saccharides and derivatives thereof are preferable. Still preferred examples of active hydrogen compounds include ethylene glycol, propylene glycol, diethylene glycol, dipropylene glycol, 1,4-butanediol, trimethylolpropane, glycerol, diglycerol, pentaerythritol, dipentaerythritol, glucose and sorbitol.

### (Alkylene oxide compound used in case 2)

Examples of the alkylene oxide compound used in the production of polyoxyalkylene polyether polyol for use in the case 2 include those set out hereinbefore.

Of these alkylene oxide compounds, ethylene oxide, propylene oxide, 1,2-butylene oxide and styrene oxide are preferable. Ethylene oxide and propylene oxide are still preferable.

These compounds can be used singly or in combination of two or more kinds. When these compounds are used in combination, the compounds preferably contain ethylene oxide. The ratio of ethylene oxide contained in alkylene oxides is preferably in the range of 5 to 25% by weight, still preferably 10 to 20% by weight.

### (Process for producing polyoxyalkylene polyether polyol used in case 2)

The polyoxyalkylene polyether polyols (a-1), (b-1) and (c-1) for use in the case 2 can be produced by known processes. The polyoxyalkylene polyether polyols can be usually obtained by ring-opening polymerization of the above alkylene oxide with the use of the above active hydrogen compound as an initiator in the presence of a catalyst.

For example, the process for producing the polyoxyalkylene polyether polyols may comprise a step of an addition polymerization of the alkylene oxide to the active hydrogen compound as an initiator in the presence of a polymerization catalyst under high pressure. The active hydrogen compounds and the alkylene oxides can be used singly or in combination of plural kinds.

It is desired that the thus obtained polyoxyalkylene polyether polyol (a-1) have a hydroxyl value of 20 to 38 mgKOH/g, preferably 22 to 35mgKOH/g, and still preferably 28 to 35 mgKOH/g.

Further, it is desired that the polyoxyalkylene polyether polyol (a-1) have an overall degree of unsaturation of 0.060 meq/g or less, preferably 0.005 to 0.050 meq/g, and still preferably 0.005 to 0.040 meq/g.

It is desired that the polyoxyalkylene polyether polyol (b-1) have a hydroxyl value of 20 to 38 mgKOH/g, preferably 22 to 35 mgKOH/g, and still preferably 28 to 35 mgKOH/g.

Further, it is desired that the polyoxyalkylene polyether polyol (b-1) have an overall degree of unsaturation of 0.060 meq/g or less, preferably 0.005 to 0.050 meq/g, and still preferably 0.005 to 0.040 meq/g.

These polyoxyalkylene polyether polyols (a-1) and (b-1) may be the same as or different from each other.

It is desired that the polyoxyalkylene polyether polyol (c-1) for use in the case 2 have a hydroxyl value of 28 to 60 mgKOH/g, preferably 33 to 50 mgKOH/g, and still preferably 38 to 45 mgKOH/g. The hydroxyl value is preferably 5 mgKOH/g or more, still preferably 7 mgKOH/g or more, greater than those of the polyoxyalkylene polyether polyols (a-1) and (b-1).

Further, it is desired that the polyoxyalkylene polyether polyol (c-1) have an overall degree of unsaturation of 0.060 meq/g or less, preferably 0.005 to 0.050 meq/g.

By lowering the overall degree of unsaturation of polyoxyalkylene polyether polyol contained in polyols, various kinds of flexible polyurethane foams with different properties over a wider range can be produced.

### (Polymer polyol used in case 2)

In the case 2, the polyol (a), polyol (b) and polyol (c) contain polymer polyol (a-2), polymer polyol (b-2) and polymer polyol (c-2), respectively.

These polymer polyols refer to a polyol containing polymers derived from a vinyl compound (hereinafter also referred to as "vinyl polymer") obtained by, in polyols, a dispersion polymerization of a compound having a vinyl group (hereinafter also referred to as "vinyl compound") such as acrylonitrile or styrene. The vinyl polymer is usually in particulate form in polyols.

Although the vinyl polymer may be a homopolymer of vinyl compound, in the case 2, the vinyl polymer obtained by grafting a portion of a vinyl compound such as acrylonitrile to polyols as a dispersion medium during the dispersion polymerization is preferable.

The vinyl compound for use in the case 2 is one having a vinyl group in its molecule. Examples of the vinyl compound include acrylonitrile, styrene and acrylamide.

These compounds can be used singly or in combination of two or more kinds. Of these, acrylonitrile and styrene are preferably used in the case 2.

The polymer polyols can be produced by known processes, and can be produced by a dispersion polymerization of a given amount of vinyl compound in polyols with the use of a radical initiator such as azobisisobutyronitrile.

In the production of polymer polyols a dispersion stabilizer, a chain transfer agent and the like may be used in combination with the vinyl compound.

In the case 2, the content weight percentage (a) of vinyl polymer contained in the polyol (a) (ratio by weight of vinyl polymer to polyol (a)) and the content weight percentage (b) of vinyl polymer contained in the polyol (b) (ratio by weight of vinyl polymer to polyol (b)) are different from each other. The difference (b-a) is preferably in the range of 2 to 30% by weight, still preferably 5 to 25% by weight, and particularly preferably 10 to 25% by weight.

With respect to the content of vinyl polymer in the polymer polyol (a-2) for use in the case 2, the ratio of vinyl polymer contained in the polyoxyalkylene polyether polyol (a-1) is preferably in the range of 5 to 40% by weight, still preferably 10 to 30% by weight, based on the amount of polyoxyalkylene polyether polyol (a-1).

With respect to the polymer polyol (b-2) for use in the case 2, the ratio of vinyl polymer contained in the polyoxyalkylenepolyetherpolyol (b-1) is preferably in the range of 5 to 40% by weight, still preferably 10 to 30% by weight, based on the amount of polyoxyalkylene polyether polyol (b-1).

With respect to the polymer polyol (c-2) for use in the case 2, the ratio of vinyl polymer contained in.the polyoxyalkylenepolyetherpolyol (c-1) is preferably in the range of 5 to 40% by weight, still preferably 10 to 30% by weight, based on the amount of polyoxyalkylene polyether polyol (c-1).

The polyols for use in the case 2 may contain polyol (d) other than the above polyols (a), (b) and (c) to an extent not detrimental to the object of the case 2.

Examples of such other polyols (d) include:
dihydric alcohols, such as ethylene glycol and propylene glycol;
trihydric alcohols, such as glycerol and trimethylolpropane;
tetrahydric alcohols, such as pentaerythritol and diglycerol;
polyoxyalkylene polyether polyols other than the polyols (a-1) and (c-1); and
polyester polyols.

These other polyols (d) may be used singly or in combination of two or more types.

The mixing ratio of these polyol (a), polyol (b) and polyol (c) is varied depending on the desired properties of a flexible polyurethane foam and is not particularly limited.

For example, when the polyols consist essentially of two selected from among the polyols (a), (b) and (c) , in particular when the polyol (a) and polyol (b) are used, by suitable determination of the mixing ratio thereof, flexible polyurethane foams having relatively high impact resilience and a wide range of values of hardness can be produced appropriately.

When the polyol (b) and polyol (c) are used, by suitable determination of the mixing ratio thereof, flexible polyurethane foams having relatively high hardness and a wide range of values of impact resilience can be produced appropriately.

The above mixing ratio can preferably be, for example, such that the polyol (b) is used in an amount of more than 0 to less than 100% by weight and also the polyol (c) is used in an amount of more than 0 to less than 100% by weight.

When the polyol (a) and polyol (c) are used, by suitable determination of the mixing ratio thereof, flexible polyurethane foams having relatively low hardness and a wide range of values of impact resilience can be produced appropriately.

The above mixing ratio can preferably be, for example, such that the polyol (a) is used in an amount of more than 0 to less than 100% by weight and also the polyol (c) is used in an amount of more than 0 to less than 100% by weight.

When all the three polyols (a), (b) and (c) are used in combination, by suitable determination of the respective contents, flexible polyurethane foams having a wide range of values of impact resilience and hardness can be produced appropriately.

### [Blowing agent]

Although a physical blowing agent and/or a chemical blowing agent may be used as the blowing agent for use in the case 1, the use of a chemical blowing agent is preferable. As such chemical blowing agent, there can be mentioned, for example, water and formic acid. Of these, water is preferably used. Water reacts with the polyisocyanate to generate carbon dioxide gas, which enables foaming of polyurethane resins.

The amount of the chemical blowing agent is preferably 1 to 7 parts by weight, still preferably 2 to 6 parts by weight, and particularly preferably 2.2 to 5.5 parts by weight, based on 100 parts by weight of the total amount of polyols.

As the physical blowing agent, carbon dioxide gas, liquefied carbon dioxide gas, hydrocarbons such as cyclopentane, Freon such as HCFC-141b, or the like can be used. Of these, carbon dioxide gas and liquefied carbon dioxide gas are preferably used, and liquefied carbon dioxide gas is particularly preferably used as the physical blowing agent.

The amount of the physical blowing agent is preferably 0 to 3% by weight, still preferably 0.1 to 3% by weight, yet still preferably 0.3 to 2.8% by weight, and particularly preferably. 0.5 to 2.5% by weight, based on the amount of polyols.

### <Blowing agent used in case 2>

A chemical blowing agent is preferably used as the blowing agent for use in the case 2. As such chemical blowing agent, there can be mentioned, for example, water and formic acid.' Of these, water is preferable. Water reacts with the polyisocyanate to generate carbon dioxide gas, which enables foaming of polyurethane resins.

The amount of the chemical blowing agent is preferably 1 to 7 parts by weight, still preferably 2 to 6 parts by weight, and particularly preferably 2.2 to 5.5 parts by weight, based on 100 parts by weight of the total amount of polyols.

In the case 2, a physical blowing agent can be used in combination with the chemical blowing agent. As the physical blowing agent, carbon dioxide gas, liquefied carbon dioxide gas, hydrocarbons such as cyclopentane, Freon such as HCFC-141b, or the like can be used. Of these, carbon dioxide gas and liquefied carbon dioxide gas are preferably used, and liquefied carbon dioxide gas is particularly preferably used as the physical blowing agent.

The amount of the physical blowing agent is preferably 0 to 3% by weight, still preferably 0.1 to 3% by weight, yet still preferably 0.3 to 2.8% by weight, and particularly preferably 0.5 to 2.5% by weight, based on the amount of polyols.

### [Catalyst]

With respect to the catalyst for use in the production of flexible polyurethane foams according to the present invention, conventional catalysts can be used and there is no particular limitation. As such catalysts, for example, aliphatic amines such as triethylenediamine, bis(N,N-dimethylaminoethyl)ether and morpholines; and organotin compounds such as tin octanoate and dibutyltin dilaurate can be used.

These catalysts can be used singly or in combination of two or more kinds.

The'amount of the catalyst used is preferably 0.05 to 10 parts by weight, still preferably 0.1 to 5 parts by weight, based on 100 parts by weight of the total amount of polyols.

### [Other additive]

In the present invention, other additives such as a crosslinking agent and a foam stabilizer can be used to an extent not detrimental to the object of the present invention.

### (Crosslinking agent)

In the case of using a crosslinking agent in the present invention, a compound having a hydroxyl value of 200 to 1800 mgKOH/g can preferably be used.

As such crosslinking agent, aliphatic polyhydric alcohols such as glycerol, alkanolamines such as diethanolamine and triethanolamine, or the like can be used.

Furthermore, polyoxyalkylene polyether polyols having a hydroxyl value of 200 to 1800 mgKOH/g can be used as the crosslinking agent, and conventional crosslinking agents can also be used.

In the case of using the crosslinking agent, it can be used in an arbitrary amount preferably ranging from 0.5 to 10 parts by weight based on 100 parts by weight of the total amount of polyols.

### (Foam stabilizer)

As the foam stabilizer optionally used in the present invention, there can be mentioned organosilicon surfactants usually used.

As such organosilicon surfactants, for example, commercially available surfactants SRX-274C, SF-2969, SF-2961 and SF-2962 (trade names, produced by Dow Corning Toray Silicone Co., Ltd.) and surfactants L-5309, L-5366, L-3601, L-5307 and L-3600 (trade names, produced by Nippon Unicar Company, Limited) can be used.

The amount of the foam stabilizer used is preferably 0.2 to 10 parts by weight, still preferably 0.5 to 5 parts by weight, based on 100 parts by weight of the total amount of polyols.

### [Resin premix]

It is preferable to use at least one of the two or three types of polyols in the case 1, or at least one of the polyols (a), (b) and (c) in the case 2 in the form of a resin premix comprising a mixture of the polyols with the blowing agent, if necessary, the catalyst, the crosslinking agent, the surfactant and the like.

The resin premix may be prepared by mixing the two or three types of polyols together, or may be prepared from one type of polyol only.

Resin premixes prepared by mixing the two or three types of polyols at varied mixing ratios can be used as various kinds of resin premixes in the production of flexible polyurethane foams.

The various kinds of the resin premixes are preferably 2 to 5 kinds, and still preferably 2 or 3 kinds.

The resin premixes can contain a flame retardant, a pigment, an ultraviolet absorber, an antioxidant and the like as other auxiliaries.

From the viewpoint of miscibility in a foaming unit and moldability of foams, the viscosity of resin premixes is preferably 4000 mPa·s or below, still preferably 3500 mPa·s or below, and particularly preferably 2500 mPa·s or below.

### [Polyisocyanate]

The polyisocyanate to be reacted with the polyols or resin premixes for use in the case 1 is preferably a mixture of tolylene diisocyanate (although the ratio of isomers such as 2,4-isomer and 2,6-isomer is not particularly limited, it is preferable to use a mixture of 2,4-isomer and 2,6-isomer having the ratio of 80:20) and other polyisocyanate. It is preferred to use a polyisocyanate containing tolylene diisocyanate in an amount of 20 to 100% by weight, preferably 25 to 100% by weight, still preferably 45 to 100% by weight, and particularly preferably 65 to 100% by weight. The polyisocyanate to be mixed with tolylene diisocyanate is not particularly limited, and conventional polyisocyanates can be used. As such palyisocyanates, for example, polymethylenepolyphenyl polyisocyanate (for example, Cosmonate M-200 (trade name, produced by Mitsui Takeda Chemicals, Ltd.)) can be preferably used.

Also, a mixture of a polyisocyanate being a composition of polymethylenepolyphenyl polyisocyanate or a urethane modification product thereof and tolylene diisocyanate can be preferably used.

Provided that an NCO index refers to the quotient of the total number of isocyanate groups in the polyisocyanate divided by the total number of active hydrogen capable of reacting with the isocyanate groups, which are contained in hydroxyl groups of polyols, amino groups of crosslinking agent or the like, water, and the like, the NCO index in the present invention is preferably in the range of 0.70 to 1.40, still preferably 0.80 to 1.30.

When the polyisocyanate containing tolylene diisocyanate in an amount of 20% by weight or more is used, the further weight lightening of the obtained flexible polyurethane foam can be realized. Moreover, by using polyols having an overall degree of unsaturation of less than 0.06 meq/g, preferably less than 0.04 meq/g, still preferably 0.005 to 0.030 meq/g, and particularly preferably 0.005 to 0.026 meq/g as aforementioned, when tolylene diisocyanate is used, flexible polyurethane foams of lower density and excellent durability can be produced, so that various kinds of flexible polyurethane foams with different properties over a wide range can be obtained.

### <Polyisocyanate for use in case 2>

The polyisocyanate to be reacted with polyols or resin premixes for use when it is not needed to change a 25% ILD hardness and a core density over a wide range is not particularly limited, and conventional polyisocyanates can be used. As such polyisocyanate, preferably, for example, tolylene diisocyanate (although the ratio of isomers such as 2,4-isomer and 2, 6-isomer is not particularly limited, it is preferable to use a mixture of 2,4-isomer and 2,6-isomer having the ratio of 80:20), methylene diisocyanate, a mixture of tolylene diisocyanate and polymethylenepolyphenyl polyisocyanate (for example, Cosmonate M-200 (trade name, produced by Mitsui Takeda Chemicals, Ltd.)) or the like can be used.

When the polyisocyanate is a mixture of tolylene diisocyanate and other polyisocyanate such as methylene diisocyanate, a mixture having a tolylene diisocyanate content of less than 20% by weight is preferably used.

Also, a mixture of a polyisocyanate being a composition of polymethylenepolyphenyl polyisocyanate or a urethane modification product thereof and tolylene diisocyanate can be preferably used.

Provided that an NCO index refers to the quotient of the total number of isocyanate groups in the polyisocyanate divided by the total number of active hydrogen capable of reacting with the isocyanate groups which are contained in, for example, hydroxyl groups of polyols, amino groups of crosslinking agent or the like, and water, and the like, the NCO index in the present invention is preferably in the range of 0.70 to 1.40, still preferably 0.80 to 1.30.

### [Process for producing flexible polyurethane foams and production apparatus therefor]

In the process for producing flexible polyurethane foams according to the present invention, the two or three types of polyols are mixed in given amounts and are brought into contact with the polyisocyanate, blowing agent and the like.

The polyols are preferably prepared in the form of resin premixes and are brought into contact with the polyisocyanate.

Although the method of mixing the polyols or resin premixes with the polyisocyanate is not particularly limited, it is usually preferred to employ a method wherein the resin premixes are mixed with the polyisocyanate by employing a high-pressure foaming unit, a low-pressure foaming unit or the like.

The apparatus for producing flexible polyurethane foams, such as a high-pressure foaming unit or a low-pressure foaming unit, according to the present invention is equipped with a feed opening for feeding the polyisocyanate and one or' a plurality of feed openings for feeding the two or three types of polyols (or various kinds of resin premixes containing the polyols). Further, the apparatus for producing flexible polyurethane foams may be equipped with a feed opening for feeding the blowing agent and a feed opening for feeding other auxiliaries.

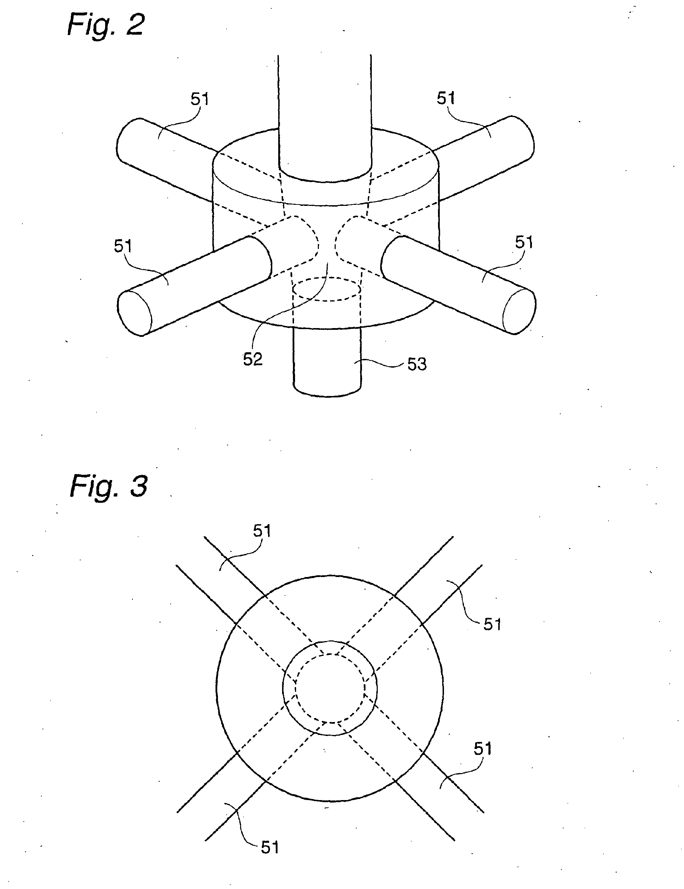

The apparatus for producing flexible polyurethane foams may be equipped with a multimixing head (multicomponent head). As shown in Fig. 2, the multimixing head comprises, for example, a device capable of feeding and mixing various kinds of polyols or resin premixes and a polyisocyanate from different feed openings at arbitrary mixing ratio. The multimixing head comprises at least three feed openings 51, mixing section 52 and liquid mixture discharge section 53. At least one of the feed openings is for feeding the polyols or the resin premixes. At least another of the feed openings is for feeding the polyisocyanate. The multimixing head is a unit for discharge of raw materials of flexible polyurethane foams, which is capable of individually controlling the feed flow rate through each of the feed openings to attain arbitrarily controlling of the mixing ratio of the polyols, the polyisocyanate and the blowing agent, capable of static mixing of the fed polyols, polyisocyanate and blowing agent in the mixing section and capable of discharging the liquid mixture through the discharge section.

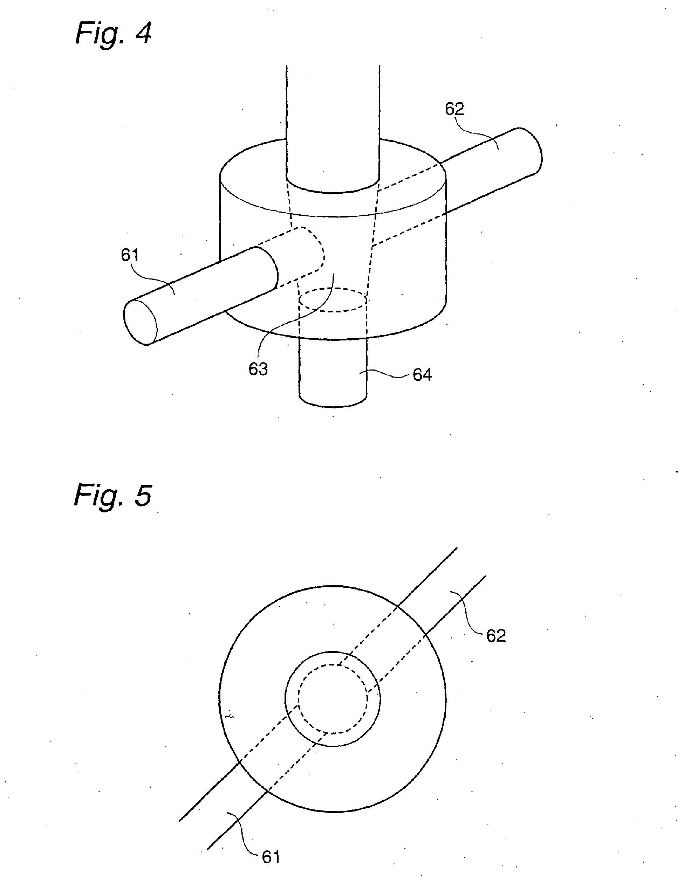

The conventional mixing head, as shown in Fig. 4, comprises one feed opening 61 for feeding a polyol or a resin premix, one feed opening 62 for feeding a polyisocyanate, mixing section 63 and liquid mixture discharge section 64. Thus, the mixing ratio of polyols is limited at the time of resin premix preparation. By contrast, when the above multimixing head is used, the mixing ratio of polyols can be arbitrarily regulated at the time of mixing of polyols and polyisocyanate.

The one or a plurality of feed openings for feeding the polyols or the resin premixes are preferably 1 to 5, still preferably 1 to 3 feed openings.

The single production apparatus for use in the process for producing flexible polyurethane foams according to the present invention refers to a series of flexible polyurethane foam production units comprising a combination of two or three polyol tanks, a polyisocyanate tank, a resin premix preparation drum, a unit for mixing the polyisocyanate with the polyols or the resin premixes (hereinafter referred to as "mixing unit") and a unit for foaming (hereinafter referred to as "foaming unit").

The multimixing head can be used as the above mixing unit.

The mixing unit and foaming unit may be separated from each other, or be unified.

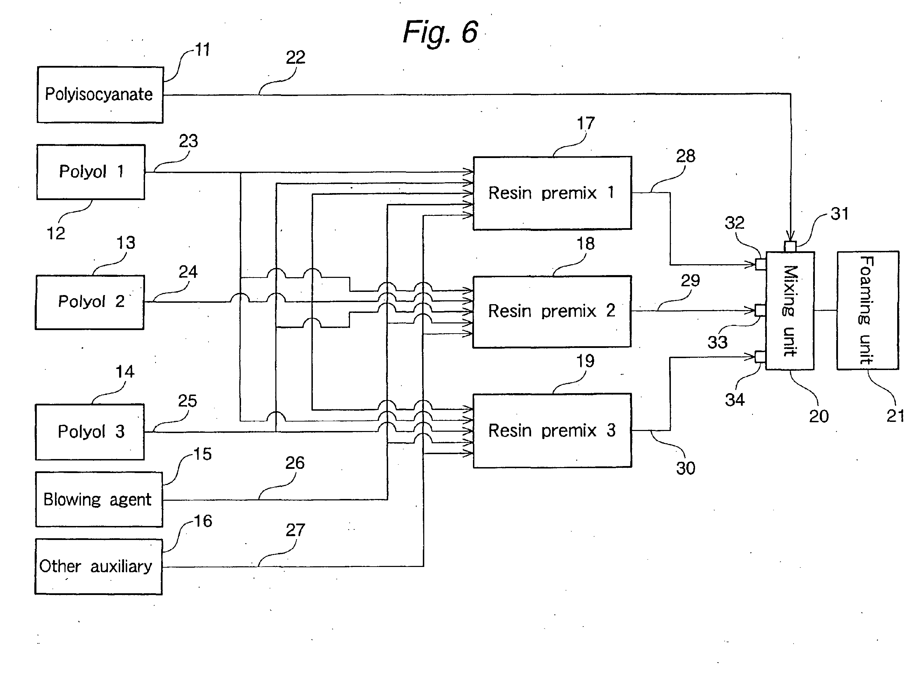

Hereinafter, the process for producing flexible polyurethane foams and the production apparatus therefor according to the present invention, for example, the apparatus for producing flexible polyurethane foams, equipped with three resin premix preparation drums and three feed openings for feeding polyols or resin premixes, will be described in detail with reference to Fig. 6. Fig. 6, however, in no way limits the apparatus for producing flexible polyurethane foams according to the present invention.

As shown in Fig. 6, the single production apparatus for flexible polyurethane foams according to the present invention comprises tank 11 for polyisocyanate, tank 12 for polyol 1, tank 13 for polyol 2, tank 14 for polyol 3, tank 15 for blowing agent, tank 16 for other auxiliary, drum 17 for preparing resin premix 1, drum 18 for preparing resin premix 2, drum 19 for preparing resin premix 3, mixing unit 20, foaming unit 21, supply line 22 for polyisocyanate, supply line 23 for polyol 1, supply line 24 for polyol 2, supply line 25 for polyol 3, supply line 26 for blowing agent, supply line 27 for other auxiliary, resin premix 1 supply line 28, resin premix 2 supply line 29, supply line 30 for resin premix 3, feed opening 31 for polyisocyanate, feed opening (I) 32 for resin premix 1, feed opening (II) 33 for resin premix 2 and feed opening (III) 34 for resin premix 3.

### (1) Preparation of resin premix

Although the polyols may directly be mixed in the mixing unit 20, it is preferable to prepare resin premixes. The preparation of resin premixes will be described below.

The polyol 1 in the tank 12 for polyol 1, the polyol 2 in the tank 13 for polyol 2 and the polyol 3 in the tank 14 for polyol 3, at desired polyol mixing ratio, are fed into the drum 17 for preparing resin premix 1 through the supply line 23 for polyol 1, the supply line 24 for polyol 2 and the supply line 25 for polyol 3, respectively.

Optionally, the blowing agent in the tank 15 for blowing agent and the other auxiliaries in the tank 16 for other auxiliary are fed into the drum 17 for preparing resin premix 1.

The polyols, the blowing agent and the other auxiliaries are mixed to obtain resin premix 1.

In the same manner, resin premixes 2 and 3 of different polyol mixing ratios are prepared. At the preparation, optionally, the blowing agent and the other auxiliaries may be mixed.

The resin premixes may be prepared from only one of the polyols without mixing of the polyols.

The blowing agent and/or the other auxiliaries may be fed into the resin premix preparation drums 17 to 19, or into the polyol supply lines 23 to 25.

### (2) Mixing of resin premix and polyisocyanate

The resin premixes 1, 2 and 3 in the drums 17 to 19 for preparing resin premixes are fed into the mixing unit 20 from the feed opening (I) 32 through the supply line 28 for resin premix 1, from the feed opening (II) 33 through the supply line 29 for resin premix 2 and from the feed opening (III) 34 through the supply line 30 for resin premix 3, respectively. The polyisocyanate in the tank 11 for polyisocyanate is fed into the mixing unit 20 from the feed opening 31 for polyisocyanate through the supply line 22 for polyisocyanate. The polyols, the polyisocyanate, the blowing agent and the other auxiliaries are mixed to bring into contact with each other.

The mixing operation is preferably carried out by static mixing. Although the static mixing may be performed with the use of usually employed specified mixing element, it is preferable to carry out the static mixing by a high-pressure collision mixing of the polyisocyanate and the polyols. The collision mixing and the mixing element may be employed in combination.

At the above mixing, the blowing agent and/or the other auxiliaries may be fed with any one or plural types of the polyols, with the polyisocyanate, or individually through another feed opening.

The discharge pressure of liquids such as the polyols and the polyisocyanate is not limited as long as the polyols, polyisocyanate, blowing agent and other auxiliaries can be mixed homogeneously. The discharge pressure is preferably 5 MPa or higher, still preferably 7 to 50 MPa, and particularly preferably 7 to 20 MPa. When the discharge pressure is 5 MPa or higher, the liquids can be thoroughly mixed, so that flexible polyurethane foams with desired properties can be stably obtained.

Although the control of the above discharge pressure may be accomplished by controlling of the pressure of liquid mixture in the mixing unit or by controlling of the pressure at discharge section for the liquid mixture in the multimixing head, it is preferable to independently control the supply pressure of each liquid at the feed opening for polyisocyanate and the feed opening for resin premix. The device for controlling the supply pressure of each liquid, although may be installed at any part of the supply lines, is preferably installed at each of the feed openings or just before the same.

The mixing ratio of the polyol 1, the polyol 2, the polyol 3, the polyisocyanate, the blowing agent and the other auxiliaries can be arbitrarily changed by varying the mixing ratio of resin premixes, and can be determined depending on the desired properties of a flexible polyurethane foam.

The resin premixes 1, 2 and 3 may be fed through three feed openings 32, 33 and 34, respectively, into the mixing unit 20, or after mixing with each other in advance, may be fed through one or two feed openings for polyol into the mixing unit 20, followed by mixing with the polyisocyanate.

Optionally, the blowing agent and/or the other auxiliaries may be mixed.

### (3) Foaming

The resultant mixture is fed from the mixing unit 20 into a metal mold 'of the foaming unit 21, and foaming, loading and curing are carried out to obtain a flexible polyurethane foam with given form.

The mixing unit 20 and the foaming unit 21 may be separated from each other, or unified. When the mixing unit 20 and the foaming unit 21 are unified, foaming can be carried out simultaneously with the mixing of resin premix and polyisocyanate or immediately thereafter.

Although it is preferable to mix the blowing agent and/or other auxiliaries to at least one of the resin premixes 1, 2 and 3 in the section of "(1) Preparation of resin premix", the blowing agent and/or other auxiliaries may directly be fed into the mixing unit 20, or may be fed into the resin premix supply lines 28 to 30.

At least one.of the polyols 1, 2 and 3. is preferably in the form of a resin premix. The polyols not prepared in the form of resin premixes may be directly fed into the mixing unit 20 without using the drums for preparing resin premixes.

When all the polyols are not prepared in the form of resin premixes, the polyols, the blowing agent and the other auxiliaries may be directly fed into the mixing unit 20.

This production process of the present invention can be employed in the known method of producing a polyurethane foam, such as a cold cure mold foaming method, a hot cure mold foaming method or a slab foaming method.

When the above process for producing flexible polyurethane foams is performed in accordance with, for example, the cold cure mold foaming method, the curing time is usually in the range of 1 to 10 min, the mold temperature ranges from room temperature to about 70°C, and the curing temperature is in the range of room temperature to 100°C. The foam after curing may be heated at 80 to 180°C to an extent not detrimental to the object and effect of the present invention.

In the present invention, with respect to the flexible polyurethane foams produced from the above two or three types of polyols, the spectrum obtained by measuring with the use of an infrared spectrophotometer has a peak in the range of 1645 to 1700 cm⁻¹.

This process for producing flexible polyurethane foams according to the present invention enables the arbitrary control of characteristics, such as the hydroxyl value of the polyol and the content of the polymer polyol, by appropriate mixing of essentially two or three types of specified polyols, so that flexible polyurethane foams having a specified set ratio, wide ranges of values of hardness and density so as tomeet requirements of a wide range of values of properties can be arbitrarily obtained.

For example, by varying the mixing ratios of two or three types of polyols, the polyisocyanate and the blowing agent, with respect to the obtained flexible polyurethane foam, the core density can be changed in the range of 20 to 70 kg/m³, preferably 25 to 65 kg/m³; the 25% ILD hardness can be changed in the range of 50 to 400 N/314 cm², preferably 55 to 380 N/314 cm²; the wet heat compression set can be changed in the range of preferably 0 to 25%, still preferably 1 to 20%, and particularly preferably 2 to 15%.

The amount of each of two or three types of polyols mixed is preferably varied in the range of 0 to 100 parts by weight.

With respect to the flexible polyurethane foams, the hardness change in a repeated compression test is preferably in the range of 1 to 18%, still preferably 1 to 15%, and particularly preferably 1 to 13%.

Further, with respect to the above flexible polyurethane foams, the impact resilience is preferably in the range of 45 to 80%, still preferably 50 to 75%, and particularly preferably 55 to 73%.

With respect to the impact resilience of a flexible polyurethane foam according to a conventional process, the difference between the maximum value and the minimum value was 3 to 4% even when specified raw materials or specified resin premixes are used. For example, in the conventional process, it was difficult to produce a flexible polyurethane foam having an impact resilience of 70% and a flexible polyurethane foam having an impact resilience of 60% in combination by employing a conventional production apparatus. By contrast, in the process of the present invention, the difference between the maximum value and the minimum value of impact resilience is at least 6%, preferably 10% or more. Therefore, the process of the present invention enables to produce the above two types of flexible polyurethane foams with different impact resilience values in combination by employing the single production apparatus. Further, the process of the present invention enables to produce flexible polyurethane foams with a impact resilience values falling between the maximum value and the minimum value of impact resilience (for example, 65%) by employing the single production apparatus.

The process for producing flexible polyurethane foams according to the present invention enables to continuously produce the various kinds of flexible polyurethane foams with different properties by employing the single production apparatus. In this specification, the expression "to continuously produce" means producing a plurality of flexible polyurethane foams by repeating the step of mixing polyols or resin premixes with a polyisocyanate and the step of foaming the mixture. The expression "to continuously produce various kinds of flexible polyurethane foams with different properties" means, for example, that, in the production of a plurality of flexible polyurethane foams by repeating the mixing and foaming steps, various kinds of flexible polyurethane foams with different properties are produced in random order by mixing the polyols, the polyisocyanate and the blowing agent while varying the mixing ratio thereof, or mixing ratio of the resin premixes, upon every production of one flexible polyurethane foam.

The various kinds of flexible polyurethane foams can be produced in a combination of at least two flexible polyurethane foams with different hardness values.

As the combination of flexible polyurethane foams, there can preferably be mentioned at least two parts selected from among a main part of an automobile seat cushion, a side part of an automobile seat cushion, a main part of an automobile seat back and a side part of an automobile seat back. Also, the combination may include.parts of the same segment which have different hardness values.

Examples of the combination of flexible polyurethane foams include:
a combination of a main part of an automobile seat cushion and a side part of an automobile seat cushion,
a combination of a main part of an automobile seat cushion and a main part of an automobile seat back,
a combination of a main part of an automobile seat cushion and a side part of an automobile seat back,
a combination of a side part of an automobile seat cushion and a main part of an automobile seat back,
a combination of a side part of an automobile seat cushion and a side part of an automobile seat back,
a combination of a main part of an automobile seat back and a side part of an automobile seat back,
a combination of main parts of automobile seat cushions which have different hardness values,
a combination of side parts of automobile seat cushions which have different hardness values,
a combination of main parts of automobile seat backs which have different hardness values, and
a combination of side parts of automobile seat backs which have different hardness values.

These, however, in no way limit the possible combinations. Any combination of the parts with different hardness values can be used.

In this specification, the main part of an automobile seat cushion refers to a central sunken segment of the seat cushion on which a person sits down. The side part (also referred to as "high-hardness part") of an automobile seat cushion refers to each of segments of the seat cushion swelled like a bank on both sides of the segment on which a person sits down. The side part has a hardness which is higher than that of the main part of the seat cushion, and functions as a stabilizer of the haunch region when a person has sat down. If necessary, a front edge different-hardness part which has a hardness lower than that of the main part of the seat cushion can be attached on the upper surface of a front edge of the main part, whereby the sense of being oppressed at the femoral region can be reduced to ease pedaling.

The main part of an automobile seat back refers to a central segment of the backrest of the seat. The side part (also referred to as "high-hardness part") of an automobile seat back refers to each of segments of the seat back swelled like a bank on both sides of the central segment. The side part has a hardness which is higher than that of the main part of the seat back, and functions as a stabilizer of the back when a person has sat down.

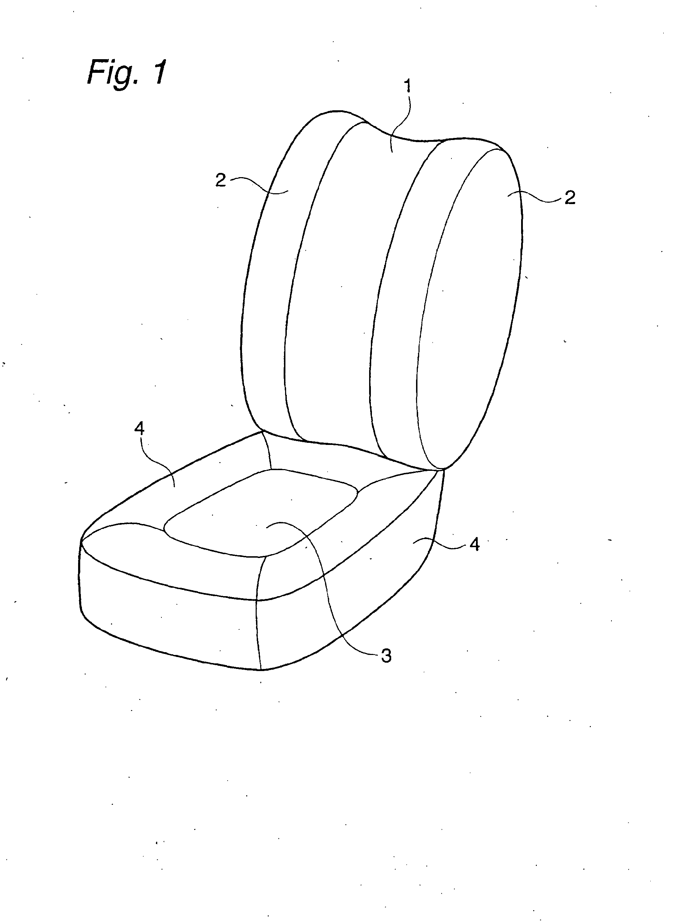

For example, the main part and side part of an automobile seat cushion and the main part and side part of an automobile seat back are denoted by numerals 1 to 4 in Fig. 1, respectively, and comprise flexible polyurethane foams with different properties with respect to impact resilience, hardness, density and the like in accordance with the frequency of use and applications.

With respect to the main part of an automobile seat cushion, the core density is preferably in the range of 30 to 60 kg/m³, still preferably 35 to 58 kg/m³, and particularly preferably 37 to 55 kg/m³. Among the automobile seat cushions, the driver's seat cushion is used with high frequency, so that high durability is required for the driver's seat cushion. Therefore, the core density thereof is preferably in the range of 40 to 60 kg/m³, still preferably 42 to 58 kg/m³, and particularly preferably 45 to 55 kg/m³. On the other hand, with respect to the seat cushions for assistant driver's seat and rear seats, the core density is preferably in the range of 30 to 45 kg/m³, still preferably 35 to 43 kg/m³, and particularly preferably 37 to 40 kg/m³. The 25% ILD hardness is preferably in the range of 150 to 280 N/314 cm², still preferably 160 to 270 N/314 cm², and particularly preferably 170 to 260 N/314 cm². The impact resilience is preferably in the range of 60 to 75%, still preferably 65 to 73%, and particularly preferably 67 to 70%. However, since the performance required for the automobile seat cushion is often widely varied depending on the type of automobile, with respect to the seat cushion with low impact resilience in order to suppress vibration transmission or disperse body pressure, the impact resilience is preferably in the range of 50 to 70%, still preferably 55 to 65%, and particularly preferably 57 to 63%.

With respect to the side part of an automobile seat cushion, the core density is preferably in the range of 38 to 65 kg/m³, still preferably 40 to 60 kg/m³, and particularly preferably 43 to 65 kg/m³. The 25% ILD hardness is preferably in the range of 180 to 400 N/314 cm², still preferably 190 to 380 N/314 cm², and particularly preferably 200 to 360 N/314 cm². The impact resilience is preferably in the range of 50 to 75%, still preferably 55 to 70%, and particularly preferably 60 to 70%.

With respect to the main part of an automobile seat back, the core density is preferably in the range of 25 to 40 kg/m³, still preferably 28 to 35 kg/m³, and particularly preferably 30 to 32 kg/m³. The 25% ILD hardness is preferably in the range of 50 to 180 N/314 cm², still preferably 60 to 170 N/314 cm², and particularly preferably 70 to 160 N/314 cm². The impact resilience is preferably in the range of 55 to 75%, still preferably 60 to 70%, and particularly preferably 65 to 70%.

With respect to the side part of an automobile seat back, the core density is preferably in the range of 30 to 50 kg/m³, still preferably 32 to 45 kg/m³, and particularly preferably 35 to 40 kg/m³. The 25% ILD hardness is preferably in the range of 100 to 400 N/314 cm², still preferably 150 to 300 N/314 cm², and optimally 180 to 250 N/314 cm². The impact resilience is preferably in the range of 50 to 75%, still preferably 55 to 70%, and particularly preferably 60 to 70%.

### <Process for producing flexible polyurethane foam and production apparatus therefor in case 2>

In the process for producing flexible polyurethane foams according to the case 2, at least two polyols selected from among the specified polyols (a), (b) and (c) are mixed in given amounts, or all of the polyol (a), polyol (b) and polyol (c) are mixed depending on the desired properties of flexible polyurethane foam, and reacted with the polyisocyanate, blowing agent and the like.

The polyols can be prepared in the form of resin premixes and be reacted with the polyisocyanate.

Although the method of mixing the polyols or the resin premixes with the polyisocyanate is not particularly limited, it is usually preferred to employ a method wherein the resin premixes are mixed with the polyisocyanate by employing a high-pressure foaming unit, a low-pressure foaming unit or the like.

The polyurethane production apparatus, such as a high-pressure foaming unit or a low-pressure foaming unit, to be employed in the above production of flexible polyurethane foams is equipped with feed opening (I), feed opening (II) and feed opening (III) for feeding polyol (a) (or resin premix containing polyol (a)), polyol (b) (or resin premix containing polyol (b)) and polyol (c) (or resin premix containing polyol (c)), respectively.

In the process for producing flexible polyurethane foams, by employing,for example,the polyurethane production apparatus equipped with feed openings (I), (II) and (III), the polyols are fed into a mold with the polyisocyanate, and foaming, loading and curing are carried out to enable obtaining flexible polyurethane foams with given form. This production process of the present invention can be employed in the known method of producing a polyurethane foam, such as a cold cure mold foaming method, a hot cure mold foaming method or a slab foaming method.

When the above process for producing flexible polyurethane foams is performed in accordance with, for example, the cold cure mold foaming method, the curing time is usually in the range of 1 to 10 min, the mold temperature ranges from room temperature to about 70°C, and the curing temperature is in the range of room temperature to 100°C. The foam after curing may be heated at 80 to 180°C to an extent not detrimental to the object and effect of the present invention.

In the present invention, with respect to the flexible polyurethane foams produced from at least two of the above polyols (a), (b) and (c), the spectrum obtained by measuring with the use of an infrared spectrophotometer has a peak in the range of 1645 to 1700 cm⁻¹.

This process for producing flexible polyurethane foams enables arbitrary control of characteristics, such as the hydroxyl value of the polyol and the content of the polymer polyol, by appropriate mixing of the specified polyols (a), (b) and (c), so that flexible polyurethane foams having a specified set ratio, a wide ranges of values of hardness and density so as to meet requirements of a wide range of values of properties can be obtained.

For example, the wet heat compression set of flexible polyurethane foams obtained by the above production process is preferably in the range of 0 to 25%, still preferably 1 to 20%, and particularly preferably 2 to 15%.

With respect to the flexible polyurethane foams, the hardness change in a repeated compression test is preferably in the range of 1 to 18%, still preferably 1 to 15%, and particularly preferably 1 to 13%.

Further, with respect to the flexible polyurethane foams, the impact resilience is preferably in the range of 45 to 80%, still preferably 50 to 75%, and particularly preferably 55 to 73%.

### (Method of property evaluation)

### (1) Hydroxyl value:

Hydroxyl value is measured by the method described in JIS K-1557.

### (2) Overall degree of unsaturation:

Overall degree of unsaturation is measured by the method described in JIS K-1557.

### (3) Wet heat compression set:

Wet heat compression set (damp heat compression set) is measured by the method of measuring compression residual set, described in JIS K-6400. In the measurement, a core part of 50 x 50 x 25 mm size is cut out from a molded flexible polyurethane foam, and is used as a test piece. The test piece is compressed to 50% thickness, sandwiched between parallel flat plates, and allowed to stand still for 22 hr at 50°C in a relative humidity of 95%. After 30 min from taking out the test piece, the thickness is measured, and the set ratio is determined by comparing the thickness after the test with before. This set ratio is defined as the wet heat compression set. With respect to the unit, the expression "Wet set [%]" was used.

### (4) Hardness change in repeated compression test

Hardness change in repeated compression test (fatigue test by constant-load pounding) is measured by the method (method A) of measuring a repeated compression residual set (a residual set of fatigue by constant-load pounding), described in JIS K-6400. In the measurement, a core part of 100 × 100 × 50 mm size is cut out from a molded flexible polyurethane foam, and is used as a test piece. The test piece is sandwiched between parallel flat plates, and a continuous 80 thousand repetitions compression test is performed at ordinary temperature, a speed of 60 repetitions per minute and 50% thickness. After 30 min from taking out the test piece, the hardness is measured, and the hardness change is determined by comparing the hardness after the test with that before.

For the hardness, 25% CLD change is used. The 25% CLD was measured by using the same instrument as in the measurement of 25% ILD under the following conditions:
the test piece is compressed to 75% based on the thickness of the test piece at a compression speed of 50 mm/min (preliminary compression);
compression is released, and the test piece is allowed to stand still for 1 min;
25% compression is performed at a compression speed of 50 mm/min;
the test piece is held compressed for 20 sec, and thereafter the drag thereof was read (this drag is hardness / 25% CLD.); and
as mentioned above, the form of the test piece is 100 x 100 x 50 mm (thickness: 50 mm).

### (5) Impact resilience:

Impact resilience is measured by the method described in JIS K-6400.

### EFFECT OF THE INVENTION

In the conventional process, to obtain various kinds of flexible polyurethane foams with widely different properties, it was needed to replace polyols and the like or to provide different polyols. By contrast, in the process for producing flexible polyurethane foams according to the present invention, various kinds of flexible polyurethane foams having a wide range of values of properties such as hardness and density so as to meet requirements of a wide range of values of properties can be obtained in a simple manner by employing a single production apparatus with the use of essentially two or three types of polyols.

### EXAMPLES

The present invention will be further described below with reference to the following Preparation Examples and Foaming Examples, which, however, in no way limit the scope of the invention. Hereinafter, the parts mean parts by weight.

The materials used in the following Preparation Examples and Foaming Examples are as follows. The overall degree of unsaturation and hydroxyl value of polyether polyols and polymer polyols were measured by the method of JIS K-155.7.

### Polyol A1:

Polyether polyol having an oxyethylene group content of 15% by weight, an overall degree of unsaturation of 0.025 meq/g and a hydroxyl value of 34 mgKOH/g, produced by a block addition of propylene oxide to glycerol and ethylene oxide to the terminal positions in the chain with the use of tetrakis[tris(dimethylamino)phosphoranylideneamino] phosphonium hydroxide as a catalyst.

### Polyol A2:

Polyether polyol having an oxyethylene group content of 15% by weight, an overall degree of unsaturation of 0.017 meq/g and a hydroxyl value of 34 mgKOH/g, produced by a block addition of propylene oxide to glycerol and ethylene oxide to the terminal positions in the chain with the use of tetrakis[tris(dimethylamino)phosphoranylideneamino] phosphonium hydroxide as a catalyst.

### Polyol A3:

Polyether polyol having an oxyethylene group content of 14% by weight, an overall degree of unsaturation of 0.040 meq/g and a hydroxyl value of 45 mgKOH/g, produced by a block addition of propylene oxide to pentaerythritol and ethylene oxide to the terminal positions in the chain with the use of potassium hydroxide as a catalyst.

### Polyol B1:

Polymer polyol having a vinyl polymer content of 20% by weight and a hydroxyl value of 28 mgKOH/g, produced by a graft polymerization of acrylonitrile and styrene in the polyol A1.

### Polyol B2:

Polymer polyol having a vinyl polymer content of 20% by weight and a hydroxyl value of 34 mgKOH/g, produced by a graft polymerization of acrylonitrile and styrene in the polyol A3.

### Polyol B3:

Polymer polyol having a vinyl polymer content of 20% by weight and a hydroxyl value of 28 mgKOH/g, produced by a graft polymerization of acrylonitrile and styrene in the polyol A2.

### Polyisocyanate 1:

A mixture of 2,4-tolylene diisocyanate, 2,6-tolylene diisocyanate and polymethylenepolyphenyl polyisocyanate having a ratio by weight of 64 : 16 : 20, and NCO% = 44.8%.

### Polyisocyanate 2:

A mixture of 2,4-tolylene diisocyanate, 2,6-tolylene diisocyanate, 4,4'-diphenylmethanediisocyanate and polymethylenepolyphenyl polyisocyanate having a ratio by weight of 20 : 5 : 45 : 30.

### Polyisocyanate 3:

A mixture of 2,4-tolylene diisocyanate, 2,6-tolylene diisocyanate, 4,4'-diphenylmethanediisocyanate, ortho rich diphenylmethanediisocyanate (a mixture of 4,4'-diphenylmethanediisocyanate and 2,4'-diphenylmethanediisocyanate with a ratio of 68 to 60 : 32 to 40, MDI-OR produced by Mitsui Takeda Chemicals, Ltd.) and polymethylenepolyphenyl polyisocyanate which has a ratio by weight of 10 : 2.5 : 25 : 25 : 37.5.
Water: ion-exchanged water.

Crosslinking agent 1: Actocol KL-210 (crosslinking agent having a hydroxyl value of 830 mgKOH/g, produced by Mitsui Takeda Chemicals, Ltd.).

Crosslinking agent 2: diethanolamine.

Cell opener 1: Actocol EP-505S (polyether polyol having a hydroxyl value of 51 mgKOH/g, produced by Mitsui Takeda Chemicals, Ltd.).

Catalyst 1: Minico L-1020 (33% dipropylene glycol solution of triethylenediamine, produced by Katsuzai Chemicals Corporation).

Catalyst 2: Minico TMDA (70% dipropylene glycol solution of bis(dimethylaminoethyl) ether, produced by Katsuzai Chemicals Corporation).

Foam stabilizer 1: L-5309 (silicone foam stabilizer, produced by Nippon Unicar Co., Ltd).

Foam stabilizer 2: L-3601 (silicone foam stabilizer, produced by Nippon Unicar Co., Ltd).

Foam stabilizer 3: SF-2962 (silicone foam stabilizer, produced by Dow Corning Toray Silicone Co., Ltd.).

Foam stabilizer 4: SF-2969 (silicone foam stabilizer, produced by Dow Corning Toray Silicone Co., Ltd.).

Physical blowing agent: liquefied carbon dioxide gas. In the Examples, liquefied carbon dioxide gas was added in an amount of 1.5 parts based on 100 parts of polyols/polymer polyols.

The properties were measured in accordance with JIS K-64 00.

Flexible polyurethane foams were produced in accordance with the following procedure. Herein, the isocyanate index refers to an equivalent ratio of isocyanate group to active hydrogen in a reaction system. When the isocyanate index is less than 1. 0, isocyanate groups are deficient to active hydrogen, whereas when the isocyanate index is greater than 1.0, isocyanate groups are in excess.

First, the following resin premixes (mixtures of polyols and auxiliaries) were prepared.

### [Experiment 1]

### <Preparation Example>

### (Preparation of resin premix)

Resin premixes 1 to 3 were prepared by mixing compounds described above at the ratios indicated in Table 1.

**Table 1**

| | Resin premix-1 | Resin premix-2 | Resin premix-3 |
|---|---|---|---|
| Polyol A1 | 60 | 10 | 30 |
| Polyol B 1 | 40 | 90 | - |
| Polvol B2 | - | - | 70 |
| Crosslinker 1 | 3.0 | 3.0 | 1.5 |
| Water | 5.0 | 2.8 | 2.3 |
| Catalyst 1 | 0.4 | 0.4 | 0.4 |
| Catalyst 2 | 0.1 | 0.1 | 0.1 |
| Foam stabilizer 1 | 1 | 0.3 | 1.5 |
| Foam stabilizer 2 | - | 0.7 | - |
| Cell opener 1 | 2 | - | - |

### <Foaming Example>

The resin premixes and the polyisocyanate were fed into a high-pressure foaming unit equipped with three feed openings for resin premixes and one feed opening for polyisocyanate. The liquid temperature was adjusted to 24 - 25°C. The resin premixes were discharged at the ratios indicated in Table 2, and were poured into an aluminum mold of 400 x 400 x 100 mm inside dimension. The temperature of the aluminum mold had been adjusted to 63°C in advance. Immediately after the pouring, the mold was closed and foaming was carried out. The resultant foam was cured with maintaining the temperature of the mold for 6 min. The obtained flexible polyurethane foam was taken out and performed crushing (mechanical treatment for cell communication).

At the mixing of the resin premixes and the polyisocyanate, the discharge pressure was held in the range of 9 to 11 MPa in all the Foaming Examples.

The properties of the obtained flexible polyurethane foams were measured in accordance with JIS K-6400. The results of property measurement are listed in Table 2. In the FT-IR measurement, with respect to all the flexible polyurethane foams, an absorption peak was recognized in the range of 1645 to 1700 cm⁻¹.

In Table 2, there are listed not only the mixing ratios of resin premixes but also the "mixing ratios of various components" calculated from the mixing ratios of resin premixes prepared.

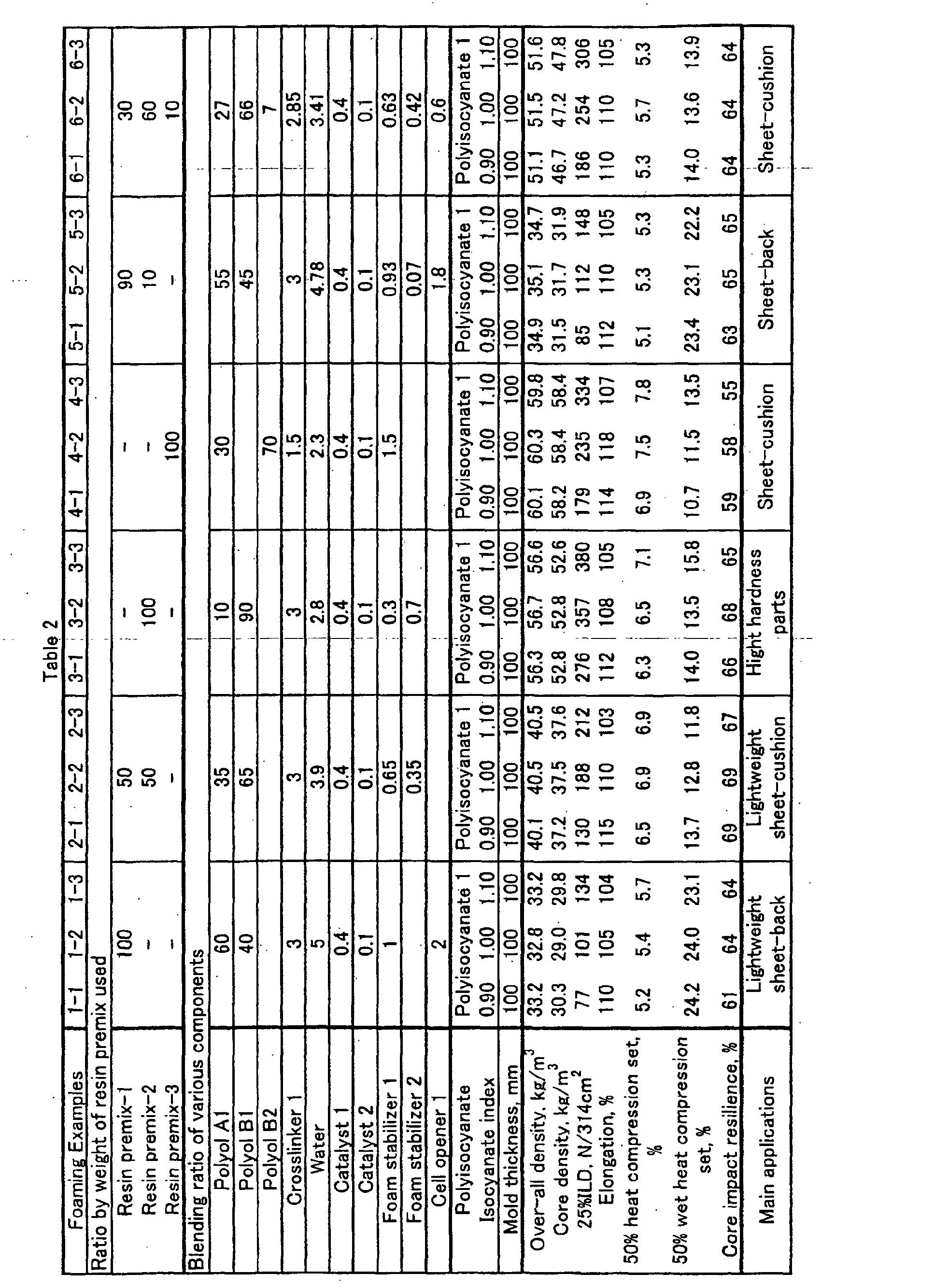

Table 2 shows examples of production wherein, in total, six types of flexible polyurethane foams for a main part of a lightweight seat back, a main part of a lightweight seat cushion, high-hardness parts of a seat cushion and a seat back, a main part of an ordinary seat back, a main part of a seat cushion with low impact resilience and a main part of an ordinary seat cushion were produced by preparing three types of resin premixes (resin premixes 1, 2 and 3) from three types of polyols (polyols A1, B1 and B2) and reacting them with polyisocyanate 1. In the conventional production process differing from the present invention, however, only three types of flexible polyurethane foams could be produced from three types of resin premixes. Further, at least six types of polyols or resin premixes were required for production of six types of flexible polyurethane foams.

The flexible polyurethane foams of Foaming Examples 1-1 to 1-3 given by using the resin premix 1 have a core density of 29.0 to 30.3 kg/m³ and a 25% ILD hardness of 77 to 134 N/314 cm², so that the foams can be used for extremely lightweight seat backs. In Foaming Examples 3-1 to 3-3 given by using the resin premix 2, high-hardness flexible polyurethane foams having a 25% ILD hardness of 276 to 380 N/314 cm² can be obtained, which are suitable for use as high-hardness parts of different-hardness foams for a seat cushion and a seat back.

The flexible polyurethane foams of Foaming Examples 4-1 to 4-3 given by using the resin premix 3 have a core density of 58.2 to 58.4 kg/m³, a 25% ILD hardness of 179 to 334 N/314 cm² and a impact resilience of 55 to 59%, so that the foams are suitable for use as seat cushions of low impact resilience.

The flexible polyurethane foams of Foaming Examples 2-1 to 2-3 wherein, at the time of discharge, the resin premixes 1 and 2 were mixed in the foaming unit (mixing ratio: 50/50) have a core density of 37.2 to 37.6 kg/m³ and a 25% ILD hardness of 130 to 212 N/314 cm², so that the foams can be suitably used as lightweight seat cushions. The flexible polyurethane foams of Foaming Examples 5-1 to 5-3 wherein the mixing ratio of resin premixes 1 and 2 was changed (mixing ratio: 90/10) have a core density of 31.5 to 31.9 kg/m³ and a 25% ILD hardness of 85 to 148 N/314 cm², so that the foams can be suitably used for main parts of seat backs with densities slightly higher than in Foaming Examples 1-1 to 1-3.

The flexible polyurethane foams of Foaming Examples 6-1 to 6-3 wherein the resin premixes 1, 2 and 3 were mixed in the foaming unit (mixing ratio: 30/60/10) have a core density of 46.7 to 47.8 kg/m³, a 25% ILD hardness of 186 to 306 N/314 cm² and a impact resilience of 64%, so that the foams can be suitably used for main parts of seat cushions with relatively low impact resilience.

By using three types of resin premixes prepared from three types of polyols (polyols A1, B1 and B2) and by selecting desired mixing ratio of the polyols and the polyisocyanate, six types of flexible polyurethane foams with different properties over a wide range which had a core density of 29.0 to 58.4 kg/m³, a 25% ILD hardness of 77 to 380 N/314 cm² and a impact resilience of 55 to 69% can be produced.

Furthermore, by appropriately varying the mixing ratio of the polyols and the polyisocyanate, more than six types of flexible polyurethane foams can be continuously produced.

### [Experiment 2]

### <Preparation Example>

### (Preparation of resin premix)

Resin premixes 4 to 6 were prepared by mixing compounds described above at the ratios indicated in Table 3.

**Table 3**

| | Resin premix-4 | Resin premix-5 | Resin premix-6 |
|---|---|---|---|
| Polyol A2 | 90 | 20 | 80 |
| Polvol B3 | 10 | 80 | 20 |
| Crosslinker 1 | 1.0 | 2.0 | 2.5 |
| Water | 4.5 | 3.6 | 2.8 |
| Catalyst 1 | 0.4 | 0.4 | 0.4 |
| Catalyst 2 | 0.08 | 0.08 | 0.08 |
| Foam stabilizer 1 | 1.0 | - | - |
| Foam stabilizer 2 | - | 1.0 | 1.0 |

### <Foaming Example>

Flexible polyurethane foams were produced in the same manner as in Experiment 1, except that an aluminum mold of 400 × 400 × 100 mm inside dimension or 400 × 400 × 70 mm inside dimension was used and that the resin premixes were discharged at the ratios indicated in Table 4.

The properties of the obtained flexible polyurethane foams were measured in accordance with JIS K-6400. The results of property measurement are listed in Table 4. In the FT-IR measurement, with respect to all the flexible polyurethane foams, an absorption peak was recognized in the range of 1645 to 1700 cm⁻¹.

In Table 4, there are listed not only the mixing ratios of resin premixes but also the "mixing ratios of various components" calculated from the mixing ratios of resin premixes prepared.

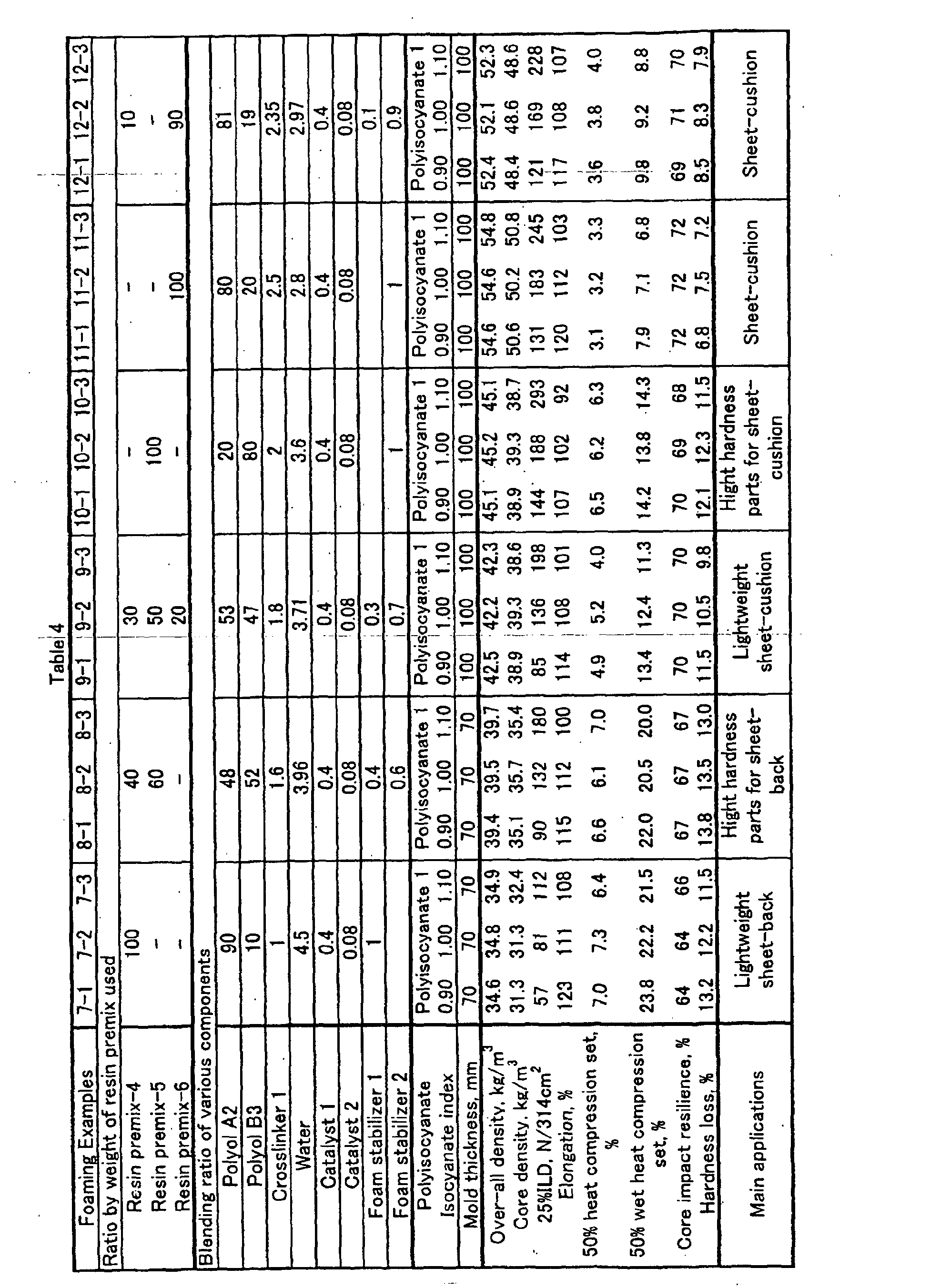

Table 4 shows examples of production wherein six types of flexible polyurethane foams for a main part of an ordinary seat back, a high-hardness part of a seat back, a main part of a lightweight seat cushion, a high-hardness part of a seat cushion, a main part of an ordinary seat cushion and a main part of a relatively lightweight seat cushion were produced by preparing three types of resin premixes (resin premixes 4, 5 and 6) from two types of polyols (polyols A2 and B3) and reacting them with polyisocyanate 1. In the conventional production process differing from the present invention, however, only three types of flexible polyurethane foams couldbe produced fromthree types of resin premixes. Further, at least six types of polyols or resin premixes were required for production of six types of flexible polyurethane foams.

The flexible polyurethane foams of Foaming Examples 7-1 to 7-3 given by using the resin premix 4 have a core density of 31.3 to 32.4 kg/m³ and a 25% ILD hardness of 57 to 112 N/314 cm², so that the foams can be used for the main parts of ordinary seat backs. In Foaming Examples 10-1 to 10-3 given by using the resin premix 5, high-hardness flexible polyurethane foams having a 25% ILD hardness of 144 to 293 N/314 cm² can be obtained, which are suitable for use as high-hardness parts of different-hardness foams for seat cushions.

The flexible polyurethane foams of Foaming Examples 11-1 to 11-3 given by using the resin premix 6 have a core density of 50.6 to 50.8 kg/m³ and a 25% ILD hardness of 131 to 245 N/314 cm², so that the foams can be suitably used for the main parts of ordinary seat cushions.

The flexible polyurethane foams of Foaming Examples 8-1 to 8-3 wherein, at the time of discharge, the resin premixes 4 and 5 were mixed in the foaming unit (mixing ratio: 40/60) have a core density of 35.1 to 35.7 kg/m³ and a 25% ILD hardness of 90 to 180 N/314 cm², so that the foams can be suitably used as high-hardness parts of seat backs. The flexible polyurethane foams of Foaming Examples 9-1 to 9-3 wherein the resin premixes 4, 5 and 6 were mixed in the foaming unit (mixing ratio: 30/50/20) have a core density of 38.6 to 39.3 kg/m³, a 25% ILD hardness of 85 to 198 N/314 cm² and a impact resilience of 70%, so that the foams can be suitably used as the main parts of lightweight seat cushions. The flexible polyurethane foams of Foaming Examples 12-1 to 12-3 wherein, at the time of discharge, the resin premixes 4 and 6 were mixed in the foaming unit (mixing ratio: 10/90) have a core density of 48.4 to 48.6 kg/m³ and a 25% ILD hardness of 121 to 228 N/314 cm², so that the foams can be suitably used as the main parts of seat cushions with densities slightly lower than in Foaming Examples 11-1 to 11-3.

By using three types of resin premixes prepared from two types of polyols (polyols A2 and B3) and by selecting desired mixing ratio of the polyols and the polyisocyanate, six types of flexible polyurethane foams with different properties over a wide range which had a core density of 31.3 to 50.8 kg/m³ and a 25% ILD hardness of 57 to 293 N/314 cm² can be produced.

Furthermore, by appropriately varying the mixing ratio of the polyols and the polyisocyanate, more than six types of flexible polyurethane foams can be continuously produced.

### [Experiment 3]

### <Preparation Example>

### (Preparation of resin premix)

Resin premixes 7 to 9 were prepared by mixing compounds described above at the ratios indicated in Table 5.

**Table 5**

| | Resin premix-7 | Resin premix-8 | Resin premix-9 |
|---|---|---|---|
| Polyol A2 | 95 | 60 | 70 |
| Polvol B3 | 5 | 40 | 30 |
| Crosslinker 1 | 1.0 | - | - |
| Crosslinker 2 | - | 0.4 | 0.4 |
| Water | 4.7 | 4.0 | 2.8 |
| Catalyst 1 | 0.45 | 0.4 | 0.4 |
| Catalyst 2 | 0.08 | 0.08 | 0.10 |
| Foam stabilizer 3 | 0.6 | 0.4 | - |
| Foam stabilizer 4 | 0.4 | 0.6 | 1.0 |
| Cell opener 1 | - | 1.5 | 2.5 |

### <Foaming Example>

Flexible polyurethane foams were produced in the same manner as in Experiment 1, except that an aluminum mold of 400 x 400 x 100 mm inside dimension or 400 x 400 x 70 mm inside dimension was used and that the resin premixes were discharged at the ratios indicated in Table 6.

The properties of the obtained flexible polyurethane foams were measured in accordance with JIS K-6400. The results of property measurement are listed in Table 6. In the FT-IR measurement, with respect to all the flexible polyurethane foams, an absorption peak was recognized in the range of 1645 to 1700 cm⁻¹.

In Table 6, there are listed not only the mixing ratios of resin premixes but also the "mixing ratios of individual components" calculated from the mixing ratios of resin premixes prepared.

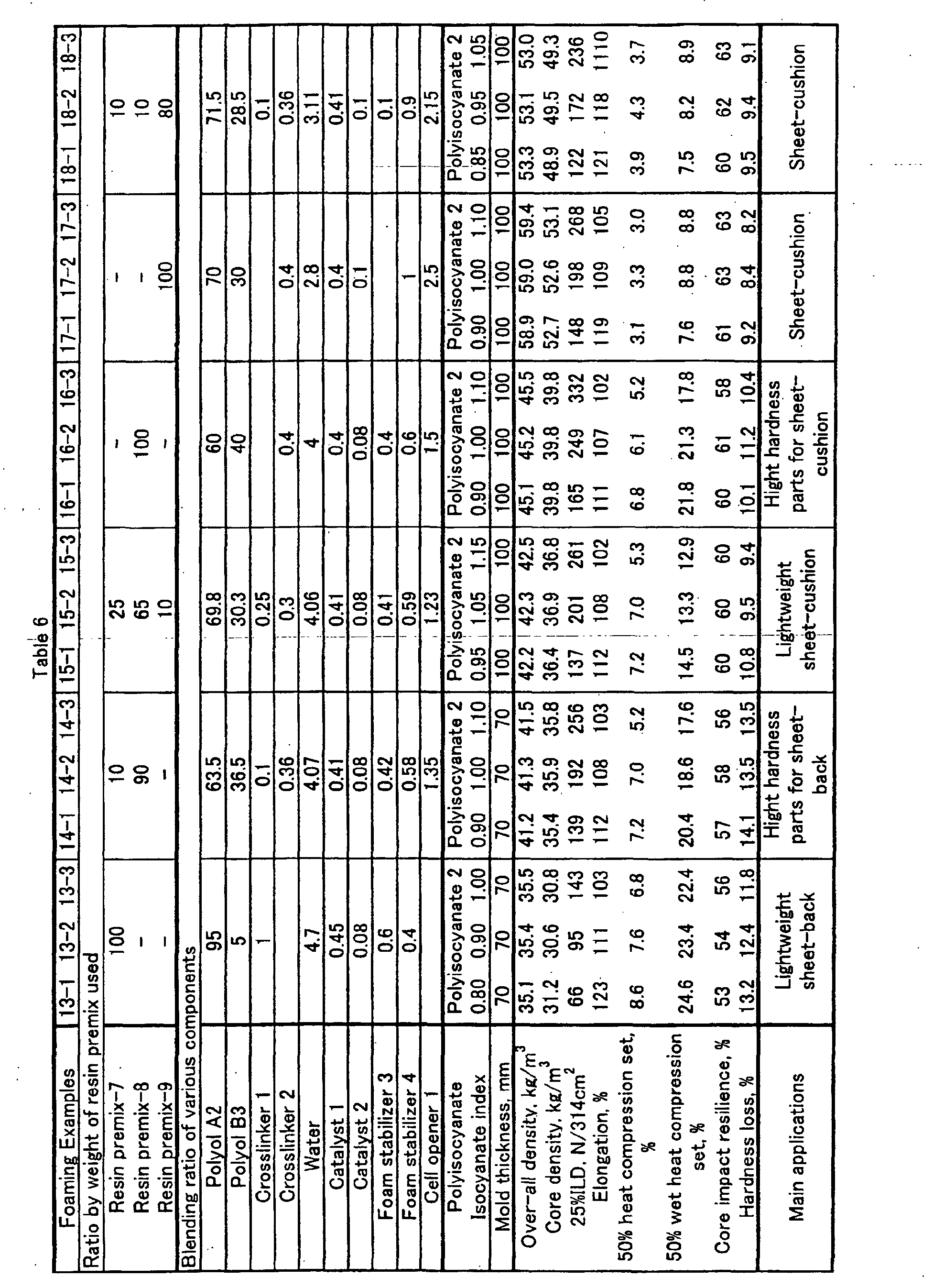

Table 6 shows examples of production wherein six types of flexible polyurethane foams for a main part of an ordinary seat back, a high-hardness part of a seat back, a main part of a lightweight seat cushion, a high-hardness part of a seat cushion, a main part of an ordinary seat cushion and a front edge different-hardness part upon a main part of a seat cushion were produced by preparing three types of resin premixes (resin premixes 7, 8 and 9) from two types of polyols (polyols A2 and B3) and reacting them with polyisocyanate 2. In the conventional production process differing from the present invention, however, only three types of flexible polyurethane foams could be produced from three types of resin premixes. Further, at least six types of polyols or resin premixes were required for production of six types of flexible polyurethane foams.

The flexible polyurethane foams of Foaming Examples 13-1 to 13-3 given by using the resin premix 7 have a core density of 30.8 to 31.2 kg/m³ and a 25% ILD hardness of 66 to 143 N/314 cm², so that the foams can be used for the main parts of lightweight seat backs. In Foaming Examples 16-1 to 16-3 given by using the resin premix 8, high-hardness flexible polyurethane foams having a 25% ILD hardness of 165 to 332 N/314 cm² can be obtained, which are suitable for use as high-hardness parts of different-hardness foams for seat cushions.

The flexible polyurethane foams of Foaming Examples 17-1 to 17-3 given by using the resin premix 9 have a core density of 52.7 to 53.1 kg/m³ and a 25% ILD hardness of 148 to 268 N/314 cm², so that the foams can be suitably used for the main parts of ordinary seat cushions.

The flexible polyurethane foams of Foaming Examples 14-1 to 14-3 wherein, at the time of discharge, the resin premixes 7 and 8 were mixed in the foaming unit (mixing ratio: 10/90) have a core density of 35.4 to 35.9 kg/m³ and a 25% ILD hardness of 139 to 256 N/314 cm², so that the foams can be suitably used as high-hardness parts of seat backs. The flexible polyurethane foams of Foaming Examples 15-1 to 15-3 wherein the resin premixes 7, 8 and 9 were mixed in the foaming unit (mixing ratio: 25/65/10) have a core density of 36.4 to 36.9 kg/m³, a 25% ILD hardness of 137 to 261 N/314 cm² and a impact resilience of 60%, so that the foams can be suitably used as the main parts of lightweight seat cushions. The flexible polyurethane foams of Foaming Examples 18-1 to 18-3 wherein, at the time of discharge, the resin premixes 7, 8 and 9 were mixed in the foaming unit (mixing ratio: 10/10/80) have a core density of 48.9 to 49.5 kg/m³ and a 25% ILD hardness of 122 to 236 N/314 cm², so that the foams can be suitably used as the main parts of seat cushions with densities slightly lower than in Foaming Examples 17-1 to 17-3.

By using three types of resin premixes prepared from two types of polyols (polyols A2 and B3) and by selecting desired mixing ratio of the polyols and the polyisocyanate, six types of flexible polyurethane foams with different properties over a wide range which had a core density of 30. 6 to 53.1 kg/m³ and a 25% ILD hardness of 66 to 332 N/314 cm² can be produced.

Furthermore, by appropriately varying the mixing ratio of the polyols and the polyisocyanate, more than six types of flexible polyurethane foams can be continuously produced.

### [Experiment 4]

### <Foaming Example>

Flexible polyurethane foams were produced in the same manner as in Foaming Example 17 of Experiment 3, except that an aluminum mold of 400 × 400 × 100 mm inside dimension and that, as the blowing agent, liquefied carbon dioxide gas as a physical blowing agent was used in combination with water as a chemical blowing agent.

The properties of the obtained flexible polyurethane foams were measured in accordance with JIS K-6400. The results of property measurement are listed in Table 7. In the FT-IR measurement, with respect to all the flexible polyurethane foams, an absorption peak was recognized in the range of 1645 to 1700 cm⁻¹.

In Table 7, there are listed not only the mixing ratios of resin premixes but also the "mixing ratios of various components" calculated from the mixing ratios of resin premixes prepared.

**Table 7**

| Foaming Examples | 19-1 | 19-2 | 19-3 |
|---|---|---|---|
| Ratio by weight of resin premix used | | | |
| Resin premix-7 | - | | |
| Resin premix-8 | - | | |
| Resin premix-9 | 100 | | |
| Liquefied carbon dioxide gas¹⁾ | 1.5 | | |

| Blending ratio of various components | | | |
|---|---|---|---|
| Polyol A2 | 70 | | |
| Polyol B3 | 30 | | |
| Crosslinker 2 | 0.4 | | |
| Water | 2.8 | | |
| Catalyst 1 | 0.4 | | |
| Catalyst 2 | 0.1 | | |
| Foam stabilizer 4 | 1 | | |
| Cell opener 1 | 2.5 | | |
| Polyisocyanate | Polyisocyanate 2 | | |
| Isocyanate index | 0.90 | 1.00 | 1.10 |
| Mold thickness, mm | 100 | 100 | 100 |
| Over-all density, kg/m³ | 51.2 | 52.3 | 51.9 |
| Core density, kg/m³ | 48.5 | 47.6 | 48.1 |
| 25%ILD, N/314cm² | 97 | 145 | 204 |
| Elongation, % | 102 | 96 | 89 |
| 50% heat compression set, % | 4.2 | 4.1 | 3.8 |
| 50% wet heat compression set. % | 9.8 | 10.2 | 9.5 |
| Core impact resilience, % | 64 | 62 | 62 |
| Hardness loss, % | 10.4 | 11.2 | 10.9 |
| Main applications | Sheet-cushion | | |

| | | | |
|---|---|---|---|
| 1) parts by weight based on 100 parts by weight of polyols | | | |

As apparent from Table 7, by using liquefied carbon dioxide gas, the density of a flexible polyurethane foam can be lowered in comparison with in Foaming Example 17, and the flexible polyurethane foam with properties to enable appropriate use for a main part of a seat cushion can be produced.

### [Experiment 5]

### <Preparation Example>

### (Preparation of resin premix)

Resin premixes 10 to 12 were prepared by mixing compounds described above at the ratios indicated in Table 8.

**Table 8**

| | Resin premix-10 | Resin premix-11 | Resin premix-12 |
|---|---|---|---|
| Polyol A2 | 95 | 65 | 80 |
| Polvol B3 | 5 | 35 | 20 |
| Crosslinker 2 | 1 | 1.5 | 1.5 |
| Water | 4.8 | 4.2 | 3.1 |
| Catalyst 1 | 0.4 | 0.4 | 0.4 |
| Catalyst 2 | 0.1 | 0.1 | 0.12 |
| Foam stabilizer 3 | 1.0 | 0.5 | - |
| Foam stabilizer 4 | - | 0.5 | 1.0 |
| Cell opener 1 | 1.5 | 2 | 2 |

### <Foaming Example>

Flexible polyurethane foams were produced in the same manner as in Experiment 1, except that use was made of an aluminum mold of 400 × 400 × 100 mm inside dimension or 400 × 400 × 70 mm inside dimension was used and that the resin premixes were discharged at the ratios indicated in Table 9.

The properties of the obtained flexible polyurethane foams were measured in accordance with JIS K-6400. The results of property measurement are listed in Table 9. In the FT-IR measurement, with respect to all the flexiblepolyurethane foams, an absorption peak was recognized in the range of 1645 to 1700 cm⁻¹.

In Table 9, there are listed not only the mixing ratios of resin premixes but also the "mixing ratios of various components" calculated from the mixing ratios of resin premixes prepared.

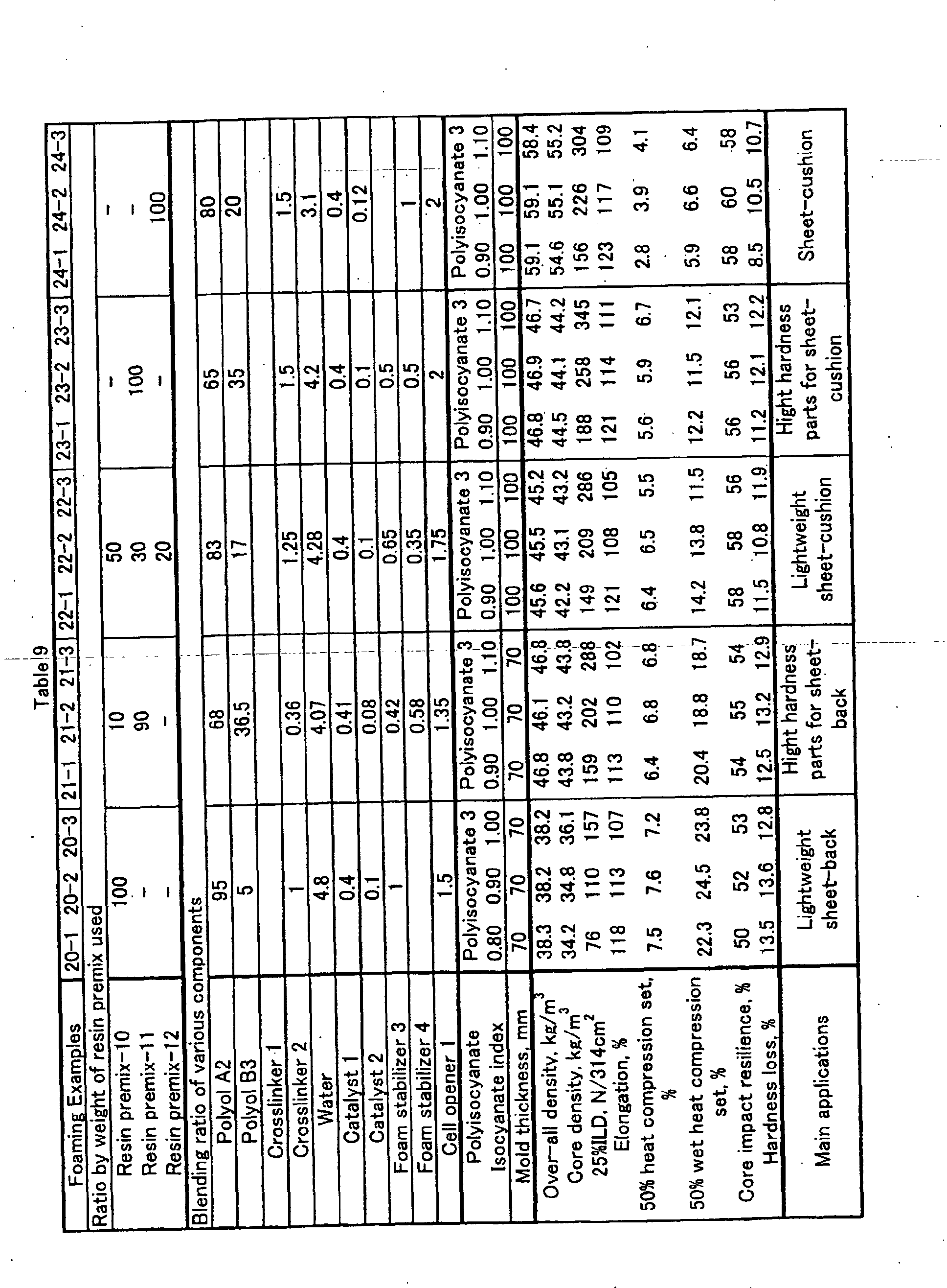

Table 9 shows examples of production wherein five types of flexible polyurethane foams for a main part of an ordinary seat back, a high-hardness part of a seat back, a main part of a lightweight seat cushion, a high-hardness part of a seat cushion and a main part of an ordinary seat cushion were produced by preparing three types of resin premixes (resin premixes 10, 11 and 12) from two types of polyols (polyols A2 and B3) and reacting them with polyisocyanate 3. In the conventional production processdifferingfromthepresentinvention, however, only three types of flexible polyurethane foams couldbe produced fromthree types of resin premixes. Further, at least five types of polyols or resin premixes were required for production of five types of flexible polyurethane foams.

The flexible polyurethane foams of Foaming Examples 20-1 to 20-3 given by using the resin premix 10 have a core density of 34.2 to 36.1 kg/m³ and a 25% ILD hardness of 76 to 157 N/314 cm², so that the foams can be used for the main parts of lightweight seat backs. In Foaming Examples 23-1 to 23-3 given by using the resin premix 11, high-hardness flexible polyurethane foams having a 25% ILD hardness of 188 to 345 N/314 cm² can be obtained, which are suitable for use as high-hardness parts of different-hardness foams for seat cushion.

The flexible polyurethane foams of Foaming Examples 24-1 to 24-3 given by using the resin premix 12 have a core density of 54. 6 to 55.2 kg/m³ and a 25% ILD hardness of 156 to 304 N/314 cm², so that the foams can be suitably used for the main parts of ordinary seat cushions.

The flexible polyurethane foams of Foaming Examples 21-1 to 21-3 wherein, at the time of discharge, the resin premixes 10 and 11 were mixed in the foaming unit (mixing ratio: 10/90) have a core density of 43.2 to 43.8 kg/m³ and a 25% ILD hardness of 159 to 288 N/314 cm², so that the foams can be suitably used as high-hardness parts of seat backs. The flexible polyurethane foams of Foaming Examples 22-1 to 22-3 wherein the resin premixes 10, 11 and 12 were mixed in the foaming unit (mixing ratio: 50/30/20) have a core density of 42.2 to 43.2 kg/m³ and a 25% ILD hardness of 149 to 286 N/314 cm², so that the foams can be suitably used as the main parts of lightweight seat cushions.

By using three types of resin premixes prepared from two types of polyols (polyols A2 and B3) and by selecting desired mixing ratio of the polyols and the polyisocyanate, five types of flexible polyurethane foams with different properties over a wide range which had a core density of 34.2 to 55.2 kg/m³ and a 25% ILD hardness of 76 to 345 N/314 cm² can be produced.

Furthermore, by appropriately varying the mixing ratio of the polyols and the polyisocyanate, more than six types of flexible polyurethane foams can be continuously produced.

## Claims

1. A process for producing various kinds of flexible polyurethane foams with different properties, comprising:
bringing at least a polyol, a polyisocyanate and a blowing agent to contact with each other by employing single production apparatus, wherein
the polyisocyanate contains tolylene diisocyanate, and
the polyol consists essentially of two or three types of polyols, at least two of these two or three types of polyols being selected from the group consisting of:
three types of polyoxyalkylene polyether polyols having an overall degree of unsaturation of less than 0.06 meq/g and
three types of polymer polyols obtained from polyoxyalkylene polyether polyols having an overall degree of unsaturation of less than 0.06 meq/g;
and wherein
at least the polyisocyanate, the polyol and the blowing agent are mixed by employing a multimixing head (multicomponent head) equipped with at least three feed openings, and
the mixing ratio of the two or three types of polyols, polyisocyanate and blowing agent varied to attain various changes of the values of the properties, thus flexible polyurethane foams with desired properties being obtainable.

2. A process for producing various kinds of flexible polyurethane foams with different properties, comprising:
bringing at least a polyol, a polyisocyanate and a blowing agent to contact with each other by employing a single production apparatus, wherein
the polyisocyanate contains tolylene diisocyanate in an amount of 20% by weight or more, and
the polyol consists essentially of two or three types of polyols, at least two of these two or three types of polyols being selected from the group consisting of:
three types of polyoxyalkylene polyether polyols having an overall degree of unsaturation of less than 0.06 meq/g and
three types of polymer polyols obtained from polyoxyalkylene polyether polyols having an overall degree of unsaturation of less than 0.06 meq/g;
and wherein
the two or three types of polyols, the polyisocyanate and the blowing agent are mixed at a mixing ratio varied to attain changing of a core density of the flexible polyurethane foam in the range of 20 to 70 kg/m³ and changing of a 25% ILD hardness of the flexible polyurethane foam within the range of 50 to 400 N/314 cm², thus flexible polyurethane foams having a spectral peak, measured by an infrared spectrophotometer, in the range of 1645 to 1700 cm⁻¹ being obtainable.

3. The process for producing flexible polyurethane foams as claimed in claim 1 or 2, wherein the mixing ratio of the two or three types of polyols, the polyisocyanate and the blowing agent is varied so as to continuously produce various kinds of flexible polyurethane foams with different density and/or hardness values by employing a single production apparatus.

4. The process for producing flexible polyurethane foams as claimed in any of claims 1 to 3, wherein the amount of each of the two or three types of polyols mixed is varied in the range of 0 to 100 parts by weight.

5. The process for producing flexible polyurethane foams as claimed in any of claims 1 to 4, whereinresinpremixes are prepared with the use of at least one of the two or three types of polyols, and the resin premixes are mixed with each other and/or with polyols.

6. The process for producing flexible polyurethane foams as claimed in claim 5, wherein the two or three types of polyols consist essentially of:
one or two types of polyoxyal kylene polyether polyols having an overall degree of unsaturation of less than 0.06 meq/g and
one polymer polyol obtained from a polyoxyalkylene polyether polyol having an overall degree of unsaturation of less than 0.06 meq/g,
or consist essentially of:
one polyoxyalkylene polyether polyol having an overall degree of unsaturation of less than 0.06 meq/g and
two types of polymer polyols obtained from polyoxyalkylene polyether polyols having an overall degree of unsaturation of less than 0.06 meq/g,
and wherein the resin premixes are various types of resin premixes prepared by mixing the two or three types of polyols and having the polyol mixing ratios different from each other.

7. The process for producing flexible polyurethane foams as claimed in any of claims 1 to 6, wherein all the polyoxyalkylene polyether polyols contained in the two or three types of polyols have an overall degree of unsaturation of less than 0.04 meq/g.

8. The process for producing flexible polyurethane foams as claimed in any of claims 1 to 7, wherein at least one of the two or three types of polyols is constituted of a polymer polyol which contains a polyoxyalkylene polyether polyol and 10% by weight or more of a vinyl polymer.

9. The process for producing flexible polyurethane foams as claimed in any of claims 1 to 8, wherein a chemical blowing agent is used.

10. The process for producing flexible polyurethane foams as claimed in any of claims 1 to 9, wherein the polyol, the polyisocyanate and the blowing agent are mixed by employing a multimixing head (multicomponent head) equipped with at least three feed openings, a raw material mixing section and a discharge section for discharging a mixture.

11. The process for producing flexible polyurethane foams as claimed in any of claims 1 to 10, wherein the polyol and the polyisocyanate are discharged at a discharge pressure of 8 MPa or above.

12. The process for producing flexible polyurethane foams as claimed in any of claims 1 to 11, wherein the flexible polyurethane foam has a wet heat compression set of 0 to 25%.

13. The process for producing flexible polyurethane foams as claimed in any of claims 1 to 12, wherein the flexible polyurethane foam has a hardness change of 1 to 18% in a repeated compression test.

14. The process for producing flexible polyurethane foams as claimed in any of claims 1 to 13, wherein the flexible polyurethane foam is a flexible polyurethane foam for use as a main part of an automobile seat cushion, a side part of an automobile seat cushion, a main part of an automobile seat back or a side part of an automobile seat back, of which a hardness is different depending on the application thereof,
and wherein at least two kinds of flexible polyurethane foams having different hardness values are produced in combination.

15. An apparatus for producing various kinds of flexible polyurethane foams with different properties, comprising:
at least one feed opening for feeding a polyisocyanate and one or a plurality of feed openings for feeding essentially two or three types of polyols, wherein
the polyisocyanate contains tolylene diisocyanate, and
the polyols consist essentially of two or three types of polyols, at least two of these two or three types of polyols being selected from the group consisting of:
three types of polyoxyalkylene polyether polyols having an overall degree of unsaturation of less than 0.06 meq/g and
three types of polymer polyols obtained from polyoxyalkylene polyether polyols having an overall degree of unsaturation of less than 0.06 meq/g;
and wherein
at least the polyisocyanate, the polyols and a blowing agent can be mixed by employing a multimixing head (multicomponent head) equipped with at least three feed openings, and
the mixing ratio of the two or three types of polyols, polyisocyanate and blowing agent is varied to attain various changes of the values of the properties, thus flexible polyurethane foams with desired properties being obtainable.

16. An apparatus for producing various kinds of flexible polyurethane foams with different properties, comprising:
at least one feed opening for feeding a polyisocyanate and one or a plurality of feed openings for feeding essentially two or three types of polyols, wherein
the polyisocyanate contains tolylene diisocyanate in an amount of 20% by weight or more, and
the polyols consist essentially of two or three types of polyols, at least two of these two or three types of polyols being selected from the group consisting of:
three types of polyoxyalkylene polyether polyols having an overall degree of unsaturation of less than 0.06 meq/g and
three types of polymer polyols obtained from polyoxyalkylene polyether polyols having an overall degree of unsaturation of less than 0.06 meq/g;
and wherein
the two or three types of polyols, the polyisocyanate and a blowing agent can be mixed at a mixing ratio varied to attain changing of a core density of the flexible polyurethane foam in the range of 20 to 70 kg/m³ and changing of a 25% ILD hardness of the flexible polyurethane foam within the range of 50 to 400 N/314 cm², thus flexible polyurethane foams having a spectral peak, measured by an infrared spectrophotometer, in the range of 1645 to 1700 cm⁻¹ being obtainable.

17. The apparatus for producing flexible polyurethane foams as claimed in claim 15 or 16, wherein the mixing ratio of the two or three types of polyols, the polyisocyanate and the blowing agent can be varied so as to enable continuously to produce various kinds of flexible polyurethane foams with different density and/or hardness values.

18. The apparatus for producing flexible polyurethane foams as claimed in any of claims 15 to 17, wherein the amount of each of the two or three types of polyols mixed can be varied in the range of 0 to 100 parts by weight.

19. The apparatus for producing flexible polyurethane foams as claimed in any of claims 15 to 18, wherein at least one of the one or a plurality of feed openings for feeding two or three types of polyols is a feed opening for feeding a resin premix,
which resin premixes can be prepared with the use of at least one of the two or three types of polyols, and the resin premixes can be mixed with each other and/or with polyols.

20. The apparatus for producing flexible polyurethane foams as claimed in claim 19, wherein the one or a plurality of feed openings for feeding two or three types of polyols are one or a plurality of feed openings for feeding various kinds of resin premixes,
and wherein the resin premixes can be fed as various kinds of resin premixes prepared by mixing the essentially two or three types of polyols and having the polyol mixing ratios different from each other, the two or three types of polyols consisting of:
one or two types of polyoxyalkylene polyether polyols having an overall degree of unsaturation of less than 0.06 meq/g and
one polymer polyol obtained from a polyoxyalkylene polyether polyol having an overall degree of unsaturation of less than 0.06 meq/g,
or consisting of:
one polyoxyalkylene polyether polyol having an overall degree of unsaturation of less than 0.06 meq/g and
two types of polymer polyols obtained from polyoxyalkylene polyether polyols having an overall degree of unsaturation of less than 0.06 meq/g.

21. The apparatus for producing flexible polyurethane foams as claimed in any of claims 15 to 20, wherein polyols containing polyoxyalkylene polyether polyols all having an overall degree of unsaturation of less than 0.04 meq/g can be fed as the two or three types of polyols.

22. The apparatus for producing flexible polyurethane foams as claimed in any of claims 15 to 21, wherein a polymer polyol containing a polyoxyalkylene polyether polyol and 10% by weight or more of a vinyl polymer can be fed as at least one of the two or three types of polyols.

23. The apparatus for producing flexible polyurethane foams as claimed in any of claims 15 to 22, wherein a chemical blowing agent can be fed as the blowing agent.

24. The apparatus for producing flexible polyurethane foams as claimed in any of claims 15 to 23, which comprises a multimixing head (multicomponent head) equipped with at least three feed openings, a raw material mixing section and a discharge section for discharging a mixture, and wherein the polyols, the polyisocyanate and the blowing agent can be mixed by employing the multimixing head (multicomponent head).

25. The apparatus for producing flexible polyurethane foams as claimed in any of claims 15 to 24, wherein the polyols and the polyisocyanate can be discharged at a discharge pressure of 8 MPa or above.

26. The apparatus for producing flexible polyurethane foams as claimed in any of claims 15 to 25, whereby flexible polyurethane foams having a wet heat compression set of 0 to 25% can be produced.

27. The apparatus for producing flexible polyurethane foams as claimed in any of claims 15 to 26, whereby flexible polyurethane foams having a hardness change of 1 to 18% in a repeatedcompression test can be produced.

28. The apparatus for producing flexible polyurethane foams as claimed in any of claims 15 to 27, wherein the flexible polyurethane foam is a flexible polyurethane foam for use as a main part of an automobile seat cushion, a side part of an automobile seat cushion, a main part of an automobile seat back or a side part of an automobile seat back, of which a hardness is different depending on the application thereof,
and whereby at least two kinds of flexible polyurethane foams having different hardness values can be produced in combination.
